# EUROPEAN PATENT SPECIFICATION

(11) **EP 0 889 657 B1**
(45) Date of publication and mention of the grant of the patent: **18.10.2006**
(21) Application number: 98111547.0
(22) Date of filing: 23.06.1998
(51) Int. Cl.: H04Q 7/08, H04Q 7/14

(54) **Location dependent processing of paging messages**
Ortsabhängige Funkrufnachrichtenverarbeitung
Traitement des messages d'appel radio dépendant de la localisation

(30) Priority: 30.06.1997 JP 18899197; 23.07.1997 JP 21245397
(43) Date of publication of application: 07.01.1999
(73) Proprietor: SEIKO EPSON CORPORATION, Tokyo 163 (JP)
(72) Inventor: Minowa, Yoshiki, Suwa-shi, Nagano-ken 392 (JP)
(74) Representative: Rupprecht, Kay

(56) References cited:
- WO-A-95/24808
- JP-A- 9 043 338
- US-A- 5 196 842
- US-A- 5 539 395

## Description

### BACKGROUND OF THE INVENTION

### Field of the Invention

This invention relates to a mobile terminal which is capable of extracting information dependent on a position thereof and a mobile communications system using the mobile terminal.

### Prior Art

Conventionally, as a mobile terminal and a mobile communications system of the above-mentioned kind, there have been proposed, for instance, a pager terminal and a paging system. A service company providing the paging system of the above-mentioned kind assigns a predetermined address (receiving address) to a pager terminal of each subscriber registered with the paging system or to a group to which the pager terminal belongs, for their paging service in a predetermined service area under contract with the subscriber, whereby a paging call signal containing personal identification information (personal ID) or group identification information (group ID) corresponding to the receiving address is transmitted to each pager terminal.

Further, paging call signals can embrace various pieces of message information, and hence the service company sends information received from callers via a telephone network or the like as well as information of predetermined messaging services, such as weather, news, and leisure, by each paging call signal such that message information contained therein is addressed to different pager terminals by using respective personal or group IDs.

On the other hand, upon receipt of various kinds of paging call signals in the service area, each pager terminal determines whether or not a personal ID or a group ID corresponding to the receiving address assigned thereto is included in each paging call signal, and only when the personal ID or group ID is included therein, the pager terminal is permitted to alert the user to the presence of an incoming message or the like by delivering alerting sound or vibrations in response to the paging call signal. Further, whether or not the pager terminal is positioned in a service area within which the paging call signals are available and at the same time included within a range specified in the contract between the subscriber and the service company is notified by a symbol of an antenna or the like appearing on the display of the pager terminal.

As described above, according to the conventional paging system, messages and various kinds of service information received via a telephone network can be sent to each pager terminal positioned within a service area. The service area, however, is a wide area defined e.g. based on a prefecture-by-prefecture basis, which makes it impossible to provide service information closely related to communities in a more narrowly defined area.

This means that when a disaster, such as an earthquake or the like, occurs, information of emergency evacuation areas or the like which are different between the more narrowly defined areas, cannot be sent in a manner appropriately limited to the respective more narrowly defined areas. Therefore, in such a case, it is practically impossible for (the owner of) each pager terminal to accurately extract only urgent and important information related to (the owner of) the pager terminal from a flood of information announced to the wide area.

Further, the above service area corresponds to an area for which a radio station transmitting paging call signals is responsible, and each area is distinguished from the other areas by the service radio frequency. To divide the service area into more narrowly defined ones, it is required to increase the number of service radio frequencies for use in the service area, and at the same time provide sufficient radio stations for the divided or more narrowly defined areas. This necessitates an enormous amount of investment in installation and equipment, which makes it practically impossible to further divide the service area.

Moreover, assuming that the conventional paging system is capable of providing services in a manner suited to more narrowly defined areas, the owner of a pager terminal who has entered one of the more narrowly defined areas from another area cannot obtain (know) important information of emergency evacuation areas etc. in case of a disaster, such as an earthquake, even if the information had been announced immediately before he (she) entered the area. This prevents the owner from acting based on the announced information without delay.

The document US 5539395 shows a portable device adapted to present messages received from a paging system dependant on location. For presentation to a user, those messages are selected which have a location signal merging to the location of the device. The respective location areas are defined, for example, by the positional resolution of a GPS-system or a cell of portable (cellular) telephone system or highway location system, wherein calls are located along highways and each location area is defined by the transmission area of a base station. The messages presented to a user might change in response to a change in location, i.e. change in location area. This is achieved by storing transmitted messages in the device, although these messages relate to an area the user is presently not located in. The stored messages might be presented to the user at the time the user enters the corresponding location area. The messages related to a particular location or receiving area are presented automatically upon entering this particular area. There is, however, no mechanism disclosed in this document, which allows the user to control the presentation of a message on the device, i.e. control the number of messages presented.

### SUMMARY OF THE INVENTION

It is a first object of the invention to provide a mobile terminal which is capable of using equipment of a conventional mobile communication system as well as responding to paging call signals varied with the position of the mobile terminal, and a mobile communications system which employs the mobile terminal to thereby provide services closely related to communities in more narrowly-defined areas.

It is a second object of the invention to provide a mobile terminal which is capable of extracting information of a paging call signal transmitted to a predetermined designated area beforehand after it enters the area.

To attain the above objects, according to a first aspect of the invention, there is provided a mobile terminal comprising:
call signal receiving means (32) for receiving a paging call signal (230) including call identification information defining identification conditions and message information corresponding to said call identification information, said identification conditions including designation of a destination area (SAa5 - SAa7);
GPS signal-receiving means (31) for receiving GPS signals (500);
position-determining means (310) for determining a position of said mobile terminal (3) based on said GPS signals (500);
receiving area-defining means for defining a receiving area (RA1 - RA4) including said position of said mobile terminal (3) based on a result of said determination of said position of said mobile terminal (3) by said position-determining means (310);
determination means for determining whether or not said receiving area (RA1 - RA4) and said destination area (SAa5 - SAa7) designated in said call identification information at least partially overlap each other;
message extracting means for extracting said message information corresponding to said call identification information when it is determined by said determination means that said receiving area (RA1 - RA4) and said destination area (SAa5 - SAa7) designated in said call identification information at least partially overlap each other;
receiving area size-changing means for changing a size of said receiving area (RA1 - RA4) as desired by a user, such that the user is capable of increasing or decreasing the size of the receiving area;
**characterized in that**
the receiving area size-changing means comprise arrow keys oriented in four directions and size-increasing/decreasing keys, such that the user is capable of increasing or decreasing the size of the receiving area (RA1 - RA4) located in a selected one of four directions from a starting point located at the position of the mobile terminal (3) by operating a corresponding one of the arrow keys and one of the size increasing/decreasing keys.

According to this mobile terminal, when the call signal-receiving means of the mobile terminal receives a paging call signal and it is determined by the determination means that reference identification information of the mobile terminal stored in the memory means fulfills identification conditions defined by call identification information contained in the paging call signal, the identification means identifies the received paging call signal as a call signal intended for the same, and carries out processing responsive to the paging call signal. At least one piece of the reference identification information is variable identification information that is changed according to a result of determination of the position of the mobile terminal carried out by the position-determining means based on the GPS signals received by the GPS signal-receiving means, and hence if the identification conditions are defined by the call identification information included in the paging call signal in a manner such that the variable identification information fulfills the identification conditions only when the mobile terminal is located in a predetermined area, the result of identification is varied according to difference in position of the mobile terminal.

If a plurality of paging call signals having different call identification signals are sent such that variable identification information of mobile terminals located in different positions or areas satisfy identification conditions defined by different call identification information, the respective mobile terminals can identify paging call signals varied according to the difference in position thereof as paging call signals intended for the same. Therefore, according to the mobile terminal, it is possible to carry out processing, e.g. to deliver a alerting sound or vibration, in response to different paging call signals in dependence on the different positions thereof.

The mobile terminal includes message-extracting means for extracting message information, if the message information is included in the paging call signal received by the call signal-receiving means, when it is determined by the determination means that the one of the at least one piece of reference identification information fulfills the identification conditions.

According to this example, since the result of identification by the identification means differs in dependence on the different positions of the mobile terminal, whether or not message information can be extracted is dependent on the position of the mobile terminal. Therefore, if a plurality of paging call signals are sent which include respective different call identification signals defining identification conditions that are to be fulfilled when the mobile terminal is in any of the respective different positions or areas, the message-extracting means of the mobile terminal can extract message information from different paging call signals depending on which of the different positions the mobile terminal is located. Therefore, if paging signals having respective call identification conditions different from each other include pieces of message information different from each other, it becomes possible for the mobile terminal to extract different pieces of message information according to the different positions thereof.

To attain the first and second objects, according to another aspect of the invention, there is provided a mobile terminal comprising:
call signal-receiving means for receiving multiple paging call signals;
memory means for storing at least one piece of reference identification information of the mobile terminal, the at least one piece of reference identification information including variable identification information;
variable identification information-changing means for changing the variable identification information based on a result of the determination of the position of the each of the mobile terminals by the position-determining means; second determination means for determining whether or not one of the at least one piece of reference identification information fulfills the identification conditions of a received one of the paging call signals; and
identification means for identifying that the received one of the paging call signals is a call signal intended for the each of the mobile terminals when it is determined by the determination means that the one of the at least one piece of reference identification information of the paging call signal received fulfills the identification conditions of the received one of the paging call signals.

According to this mobile communications system, the paging communications network transmits a plurality of paging call signals including pieces of call identification information different from each other. There are provided a plurality of mobile terminals which can carry out operations responsive to different paging call signals depending on the different positions of each mobile terminal, such as generation of a alerting sound, vibrations or the like, as well as extraction of message information, as described above as to the first aspect of the invention. And hence, if call identification information designating a predetermines position or area, whose identification conditions are fulfilled by mobile terminals located in the predetermined position or area, are sent in a state included in paging call signals, only mobile terminals in the predetermined position or area can respond to the paging call signals.

Preferably, the each of the mobile terminals further includes position information-producing means for producing position information encoded based on the result of the determination of the position of the each of the mobile terminals by the position-determining means, and the variable identification information includes the encoded position information.

According to this preferred embodiment, there are provided mobile terminals which can respond to different paging call signals according to different positions thereof, while using facilities of the conventional mobile communications system or facilities equivalent thereto. Further, call identification information is encoded, whereby information can be made compact with ease, and paging call signals containing the same is made noise-resistant.

Preferably, the mobile terminal is adopted to process call identification information which includes a piece of destination area-designating call identification information that permits the identification conditions to be fulfilled only when the mobile terminal is located in a designated destination area.

According to this preferred embodiment, facilities equivalent to those of the conventional mobile communications system are used to obtain the same advantageous effects. That is, mobile terminals are used which can respond to different paging call signals according to the different positions thereof, and at the same time facilities of the conventional mobile communications system or facilities equivalent thereto are used to provide services closely related to communities in more narrowly-defined areas. For instance, the mobile communications system can be used to provide service information, such as regional information for more narrowly-defined areas. Further, the mobile communications system can be utilized as networks for providing door-to-door delivery services or for patrolling, fire-fighting as well as informing local people of information of evacuation areas and the like in case of emergency, such as occurrence of a disaster. Further, if the size of a designated and predetermined area is changed, it is possible to change the size of a unit area of service from a narrowly-defined area to a widely-defined area without making any alterations to the existing facilities of the system.

Preferably, the piece of destination area-designating call identification information includes position information that hierarchically expresses the designated destination area.

According to this preferred embodiment, the area-designating call identification information includes position information hierarchically expressing a designated area and hence the mobile terminal can easily limit the range of a designated area from the information. This makes it possible to easily determine whether or not a paging call signal including the call identification information is intended for the mobile terminal. Further, in this case, by contriving methods of hierarchically defining the receiving area, it is possible to designate the receiving area in a manner more closely related to community life.

Preferably, the mobile terminal is adopted to process the piece of destination area-designating call identification information includes regional characteristics identification information that defines regional characteristics of the designated destination area.

According to this preferred embodiment, the area-designating call identification data includes regional characteristics identification information that defines regional characteristics (e.g. characteristics of a location along a sea coast, those of a location along mountains area, or the like) of a designated area, and hence the mobile terminal can easily determine from position information thereof whether or not a paging call signal including the call identification information is intended for the mobile terminal. If such regional characteristic identification information is determined or set beforehand, when a region is attacked by a disaster, such as a tsunami or a snow avalanche, for instance, it becomes possible to provide urgent information only for communities related to the disaster even by interrupting other service information is interrupted.

Preferably, the mobile terminal is adopted to process the piece of destination area-designating call identification information includes terminal-by-terminal characteristics identification information that defines terminal-by-terminal characteristics of the mobile terminal.

According to this preferred embodiment, terminal-by-terminal characteristics include characteristics concerning occupation, income, age difference between children, school difference, or the like of the owner of each mobile terminal (paging subscriber). In the mobile communications system, the above characteristics information is used to define terminal-by-terminal characteristic identification information, whereby it is possible to provide specific service information intended only for mobile terminals (pager subscribers) that are located in the designated area and fulfill more specific conditions.

The above and other objects, features, and advantages of the invention will become more apparent from the following detailed description taken in conjunction with the accompanying drawings.

### BRIEF DESCRIPTION OF THE DRAWINGS

FIG. 1 is a diagram showing the whole arrangement of a paging system according to an embodiment of the invention;
FIG. 2 is a diagram which is useful in explaining a service area and destination areas of a paging communications network;
FIGS. 3A to 3D are block diagrams showing construction (data format) of a POCSAG signal;
FIGS. 4A and 4B are block diagrams useful in explaining part of the signal format shown in FIGS. 3A to 3D, which is related to information addressed to a pager terminal;
FIGS. 5A is a diagram generally showing only portions corresponding to address information and message information out of the part of the data format illustrated in FIGS. 4A and 4B;
FIG. 5B is a diagram similar to FIG. 5A, which is applied to a personal ID;
FIG. 5C is a diagram similar to FIG. 5A, which is applied to a group ID;
FIG. 5D is a diagram similar to FIG. 5A, which is applied to an area ID;
FIG. 5E is a diagram similar to FIG. 5A, which is undefined for future use;
FIG. 6A is a diagram showing an example of construction of area-designating call identification information which corresponds to the FIG. 5D format;
FIG. 6B is a diagram similar to FIG. 6A, which illustrates another example of the construction of area-designating call identification information;
FIG. 6C a diagram similar to FIG. 6A, which illustrates another example of the construction of area-designating call identification information;
FIG. 7 is a block diagram showing the arrangement of a pager terminal according to the embodiment; and
FIG. 8 is a diagram which is useful in explaining receiving areas of the pager terminal shown in FIG. 7.

### DETAILED DESCRIPTION

The invention will now be described in detail with reference to the drawings showing embodiments thereof.

In each of the embodiments, a pager terminal and a paging system using the same are described by way of an example of a mobile terminal and a mobile communications system according to the invention. The above paging system utilizes facilities used by a paging system now in operation and at the same time employs pager terminals which can receive GPS (Global Positioning System) signals to identify their own positions. Each pager terminal extracts message information from a paging call signal, which is addressed thereto in a manner varying with the position of each pager terminal. The paging system thus makes various services available which are closely related to communities within more narrowly defined areas.

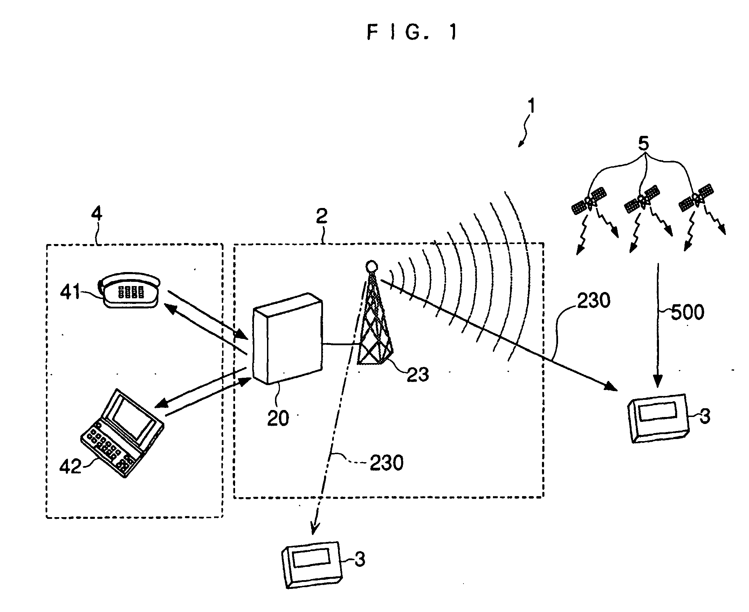

Referring first to FIG. 1, the paging system 1 is schematically shown, which is comprised of a paging communications network 2 for sending a digital paging call signal 230 including call identification information (call ID) to pager terminals 3 constituting mobile terminals, and a caller's communications network (telephone network or self-configuring communications network, hereinafter generally referred to as "the telephone network") 4 connected to the paging communications network 2.

The pager terminal 3 receives a paging call signal 230, and when reference identification information (reference ID) assigned to the pager terminal 3 fulfills identification conditions defined by a call ID of the paging call signal 230, the pager terminal 3 identifies the received paging call signal 230 as a call signal addressed thereto and carries out processing in response to the paging call signal 230.

The pager terminal 3 is capable of receiving GPS signals 500 sent from a plurality of (three) GPS satellites 5 to determine its position or location on the earth. Call IDs for calling the pager terminal 3 include conventional personal identification information (personal IDs) and group identification information (group IDs) as well as area identification information (area IDs), each type of which will be described hereinafter.

According to the paging communications network 2, information sent from a calling device, such as a telephone set 41 or a personal computer 42, via the telephone network 4, and various kinds of service information, described hereinafter, are included in the paging call signal 230 as message information to be sent to the pager terminal 3.

Further, the paging communications network 2 includes radio stations 23 for sending paging call signals 230, and a control center 20 that connects the radio stations 23 and the telephone network 4 to each other as well as processes the various kinds of information.

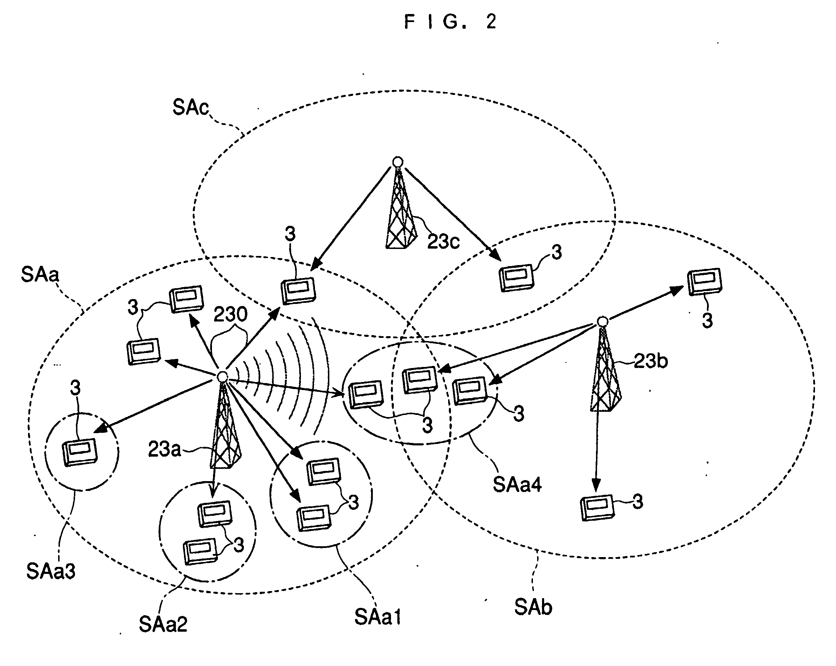

As shown in FIG. 2, the service area of the paging communications network 2 includes transmission areas (wide areas SAa, SAb and SAc) within which signals from respective radio stations 23a, 23b and 23c can be received. Each station covers an area of approximately 10 to 20 km in radius.

The paging communications network 2 has the same construction as the paging system currently in operation. That is, the paging system 1 according to the embodiment can be easily implemented by using existing paging systems or the like, and hence the costs for constructing a new paging system 1 are eliminated.

The paging communications network 2 employs the facilities of the existing paging systems as they are, and at the same time makes it possible to provide special services which are closely related to communities in each of the areas SAa1 to SAa4 which are smaller areas within the wide areas SAa through SAc, as shown in FIG. 2 as a conceptual representation the service area.

The paging system 1 adopts a POCSAG (Post Office Code Standardization Advisory Group) system for the paging call signal 230. The POCSAG protocol is also adopted in the existing paging system and hence the existing system can be used without change in this regard as well. An example of the data format used in the present invention will be described hereinafter.

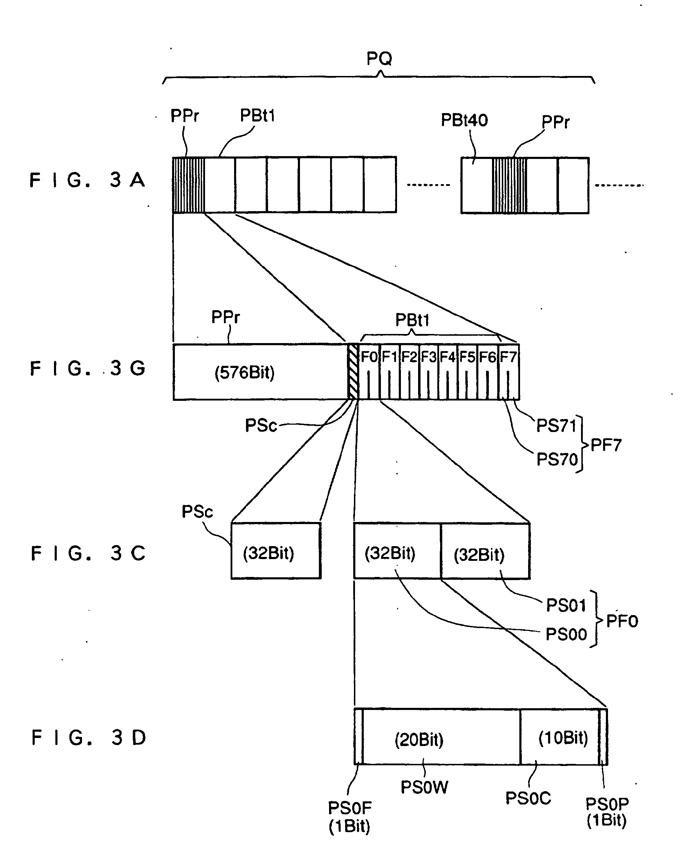

As is known in the art, a POCSAG code signal is comprised of the respective elements shown in FIGS. 3A to 3D. First, as shown in FIGS. 3A and 3B, each queue PQ as a unit of a call is comprised of a 576-bit preamble PPr formed of a repetition of 1010...... for informing each pager terminal 3 that the same has received a call signal, and 544-bit batches from the first batch PBt1 to the 40th batch PBt40.

As shown in FIGS. 3B and 3C, each batch, e.g. the first batch PBt1 is comprised of a 32-bit synchronization codeword PSc and eight 64-bit frames PF0 to PF7.

A service company assigns a call address to each paging subscriber. In the POCSAG code signal, the call addresses are classified into eight groups by using the three least significant bits thereof, and a signal or information addressed to the pager terminal 3 owned by each paging subscriber is stored in one of the eight frames PF0 to PF7 of each batch, which corresponds to the call address, e.g. in the first batch PBt1. For instance, when the three least significant bits of the call address are [0,0,0], a signal corresponding to this group is stored in the frame PF0, whereas when they are [1,1,1], a signal corresponding to this group is stored in the frame PF7.

Each frame (e.g. PF0) is comprised of two 32-bit slots (PS00, PS01). Each of the slots (e.g. PS00) is comprised, as shown in FIG. 3D, of a 1-bit address/message flag (PSOF), 20-bit address/message information (PS0W), a 10-bit check code (PSOC) and a 1-bit parity bit (PSOP).

Substantial information is sent/received in the address/message flag (PSOF) and the address/message information (PSOW). Therefore, only the address/message flag (PS0F) and the address/message information (PS0W) will be described hereafter.

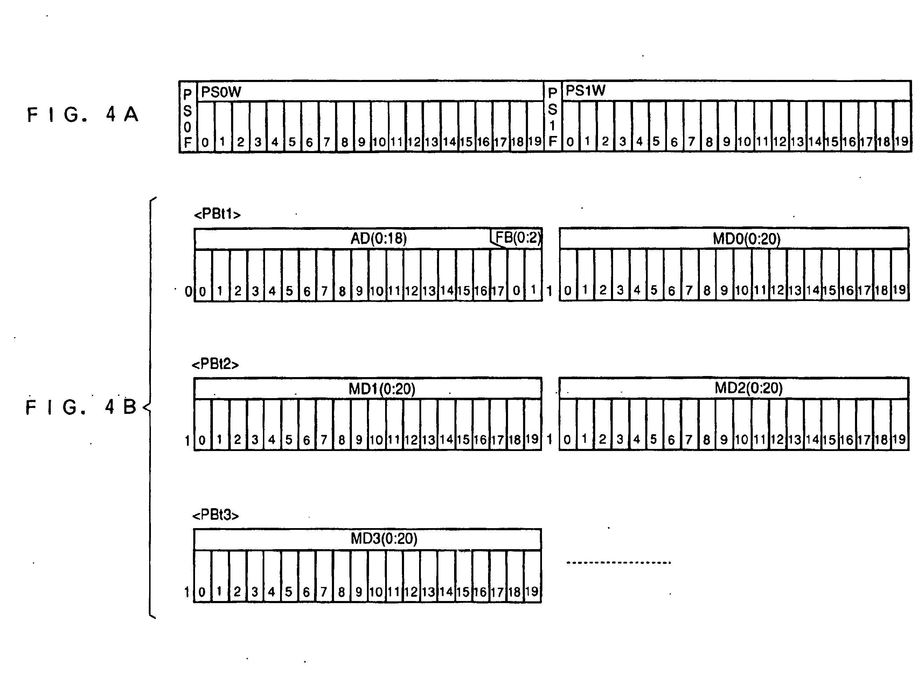

Information addressed to or intended for each pager terminal 3 is stored in the two slots of a corresponding frame of each batch for transmission. This manner of storing information is schematically shown in FIGS. 4A and 4B. FIG. 4A is a schematic representation of data format of information stored in the two slots of a batch. In the figure, sections of a 1-bit address/message flag PS0F and 20-bit address/message information PSOW in the first slot and a 1-bit address/message flag PS1F and 20-bit address/message information PS1W in the second slot are shown in a horizontally arranged sequence. It should be noted that sections of the 10-bit check codes and the 1-bit parity bits are omitted in the figure.

When a codeword corresponding to a slot is used for transmitting address information, as shown by the batch PBt1 in FIG. 4B, the address/message flag PS0F is set to 0 to indicate the transmission of an address codeword, followed by 18-bit address data AD (0 : 18) and a 2-bit function bit FB (0 : 2).

If message information is desired to be transmitted in the following slot, the address/message flag PS1F is set to 1 to indicate the transmission of a message codeword, followed by 20-bit message data MD0.

When additional message information is to be transmitted, in the next batch PBt2, message data items MD1 and MD2 are transmitted in respective message codewords. The same applies hereafter to transmit message data items MD3 and MD4 ..... in the following batches PBt3, PBt4 ....., until the codeword for a slot becomes a predetermined idle codeword or a next address codeword, whereupon transmission of a sequence of information addressed to the pager terminal by one call signal is completed.

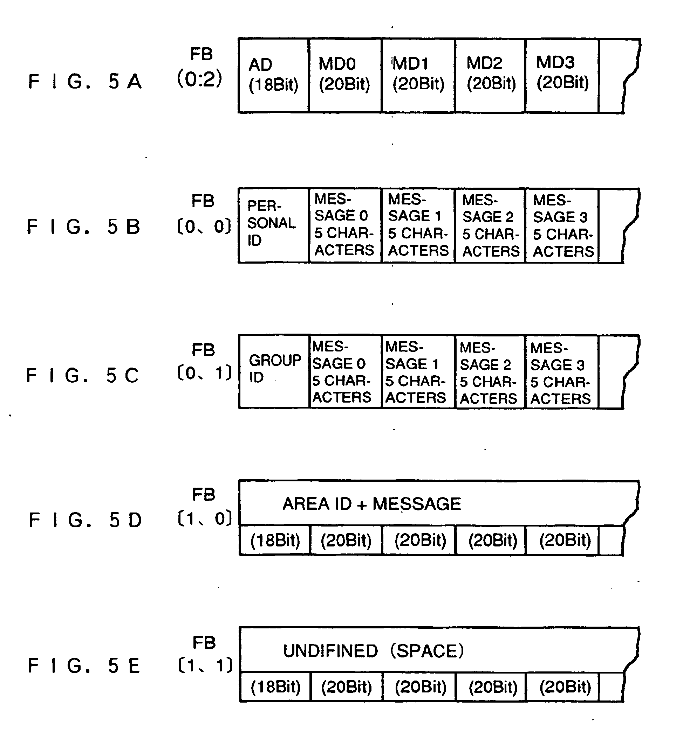

Next, FIG. 5A schematically shows only the address information item and message information items of the above information in a more simplified horizontal sequence, wherein 2 bits of the function bit FB (0 : 2) following the above address codeword is used to discriminate between call IDs when there are provided a plurality of kinds of call IDs for each pager terminal.

According to the present embodiment, the function bit FB (0 : 2) = [0, 0] is used to indicate a call made by using a personal ID, FB (0 : 2) = [0, 1] is used to indicate a call by using a group ID, and FB (0 : 2) = [1, 0] is used to indicate a call by using an area ID. The function bit (0 : 2) = [1, 1] is provided for extending the pager's capabilities in the future and currently remains undefined.

When a paging call signal 230 is sent by using a personal ID or a group ID, as shown in FIGS. 5B and 5C, the personal ID or the group ID is sent/received as address data AD (0 : 18) and message information is sent/received as message data MD0, MD1, .... following the address data AD. As message information, it is possible to send/receive five characters (1 character/4 bits) for each slot (each codeword).

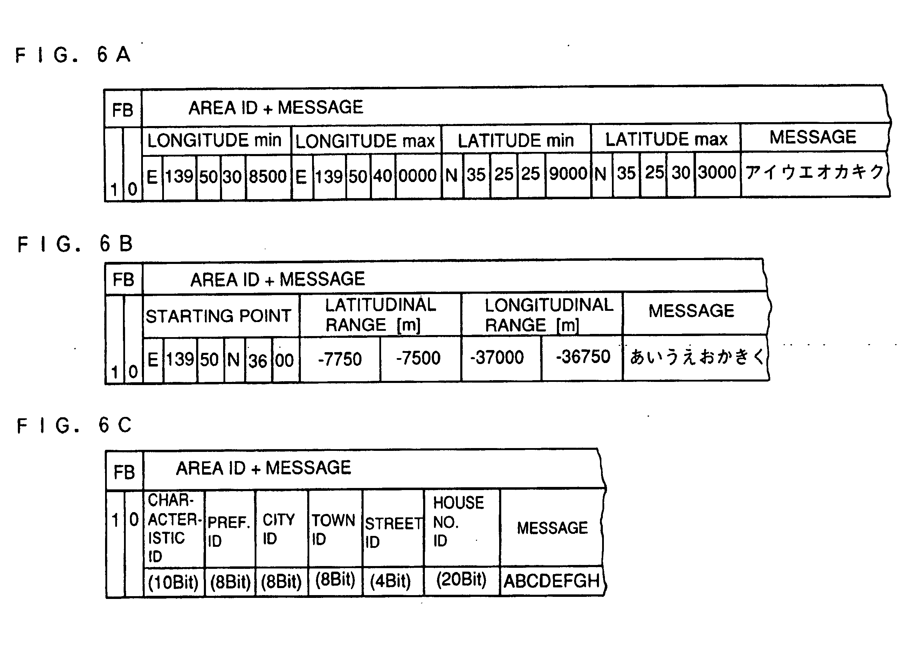

Next, when a paging call is made using the area ID, as shown in FIG. 5D, a sequence of information to be transmitted by the area ID (see FIGS. 6A to 6C) is sent/received as the address data AD, the message data MD0, etc. When all the paging terminals 3 positioned within a designated area are to be called by a single or identical area ID, one possible method is to store identical information in all of the eight frames PF0 to PF7.

For instance, FIG. 6A shows an example in which a destination area is designated by long. 139° 50' 30.8500"E to long. 139° 50' 40.0000"E and lat. 35° 25' 25.9000"N to lat. 35° 25' 30.3000"N to send a message 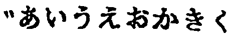 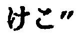 in Japanese hirakana characters (which are pronounced respectively as "a, i, u, e, o, ka, ki, ku, ke, ko) as message information to the pager terminals in the area.

It should be noted that the above destination area may be defined as a rectangular area e.g. by using a range of the east longitude (E) (distance along the east longitude) as the length of the upper side and the lower side of a rectangle and a range of the north latitude (N) (distance along the north latitude) as the length of the right-hand side and the left-hand side of the rectangle, or alternatively, as an elliptical area by using one of the range of the east longitude (E) (distance along the east longitude) and the range of the north latitude (N) (distance along the north latitude) as the major axis of an ellipse, and the other as the minor axis thereof. The same applies to the case of FIG. 6B referred to hereinafter.

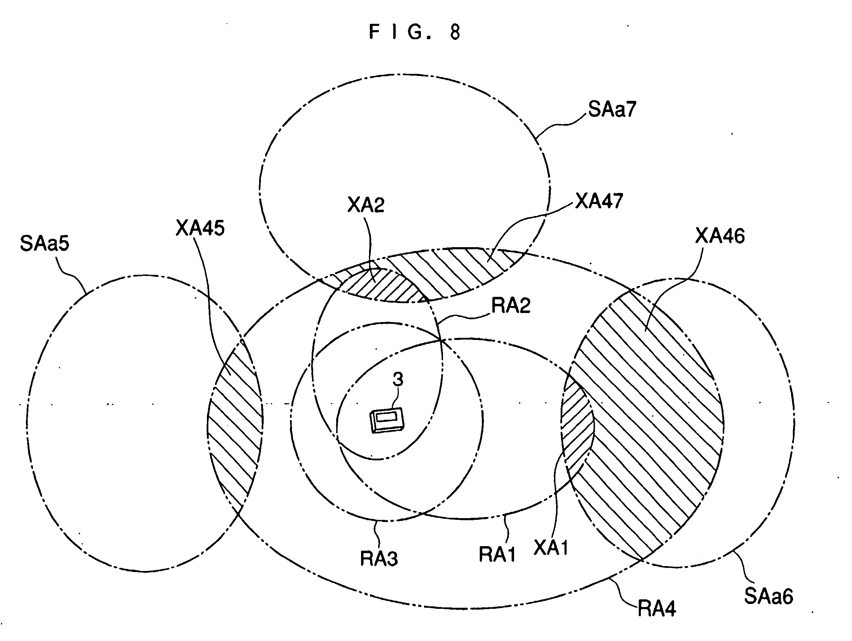

In the example, the following description will be made assuming that circular or elliptical areas shown as images in FIGS. 2 and 8 (referred to hereinbelow) are defined as destination areas. Further, in the respective figures, narrowly defined service areas, that is, the above-mentioned destination areas are each shown as destination area SAxx (SAa1 to SAa6).

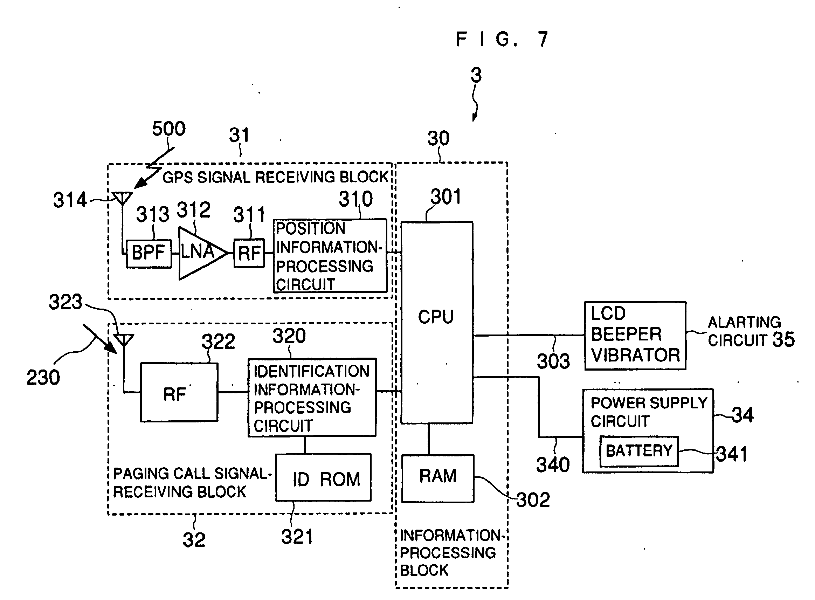

Next, description is made of the pager terminal 3 which receives the paging call signal 230 having a destination area designated as above, with reference to FIG. 7.

As shown in the figure, the pager terminal 3 basically includes an information processing block 30 for processing various kinds of information, a GPS signal-receiving block 31 for receiving GPS signals 500, a paging call signal-receiving block 32 for receiving a paging call signal 230 and a power supply circuit 34 for supplying power from cells 341 or the like to each of the component parts of the pager terminal 3. (An alerting circuit 35 will be described hereinafter).

The information processing block 30 has a CPU 301 which incorporates a ROM (not shown) for storing control programs therein according to which information is processed within the pager terminal 3 and a RAM 302 which is used as a work area for effecting various kinds of information processing operations, as well as for storing position information, information defining receiving areas, call IDs, message information, and so forth.

The RAM 302 is backed-up by a backup circuit, not shown, for preserving information or data even when the power is turned off. Instead of the RAM 302 an EEPROM or the like can be used to thereby omit the backup circuit.

The GPS signal-receiving block 31 includes a GPS signal-receiving antenna 314 via which three GPS signals 500 are received from the respective GPS satellites 5, a high-frequency circuit (RF) 311 to which the GPS signals 500 are input via a band-pass filter (BPF) 313 and a low noise amplifier (LNA) 312 to decode e.g. a C/A (Coarse/Acquisition) code in the GPS signals 500.

The GPS signal-receiving block 31 further includes a position information-processing circuit 310 basically comprised of a logic circuit to which the decoded output from the RF 311 is input. The CPU 301 cooperates with the GPS signal-receiving block 31 to calculate the respective pseudo-distances from the three GPS satellites, thereby producing two-dimensional position information, e.g. position information consisting of the east longitude and the north latitude. This data is then stored in the RAM 302.

Of course, the pager terminal 3 may be configured such that it receives more GPS signals e.g. four GPS signals 500 from respective GPS satellites to thereby obtain three-dimensional position information, which further includes additional position information for altitude or the like.

The paging call signal-receiving block 32 includes a paging call signal-receiving antenna 323 via which the paging call signal 230 is received, and a high-frequency circuit (RF) 322 to which the paging call signal 230 is input to decode call IDs and message information contained in the paging call signal 230.

The paging call signal-receiving block 32 further includes an identification information-processing circuit 320 basically comprised of a logic circuit to which the decoded output from the RF 322 is input. The CPU 301 cooperates with the identification information-processing circuit 320 to determine whether or not the received paging call signal 230 is a call signal intended for this specific pager terminal.

First, as described above with reference to FIGS. 4A and 4B, in each slot of the paging call signal 230 of the POCSAG protocol, when the 1-bit address/message flag PS0F is set to 0, the slot contains address code data representative of a call ID and hence it is determined from its function bit FB whether the call ID is the personal ID, the group ID, or the area ID.

ID codes are stored in the ID-ROM and used for answering a call with a personal ID or a group ID. When the call ID is determined to be the personal ID or the group ID, that is, when the function bit FB = [0, 0] or [0, 1], a comparison is made between the call ID and the stored ID. If matching between the call ID and the stored ID occurs, the following message data items MD0 and so forth (see FIGS. 5A to 5E) are stored in the RAM 302.

Of course, the pager terminal 3 may be configured such that the message data item MD0 and so forth are stored in advance in view of the relationship between the rate at which the paging call signal is received and the processing speed of the information processing block 30. In this case, when matching between the call ID and the personal ID or the group ID does not occur, the message data item MD0 and the like are deleted.

On the other hand, when the call ID is determined to be an area ID, that is, when the function bit FB = [1, 1], the above two-dimensional position information is read out from the RAM 302, that is, the position information of the pager terminal 3 is read out to set the same as a reference ID, whereby it is determined whether or not the reference ID fulfills the identification conditions defined by the call ID.

For instance, in the case of the above-mentioned FIG. 6A, the pager terminal 3 determines whether or not a position shown by the reference ID, that is, the position of the pager terminal 3 is contained in the destination area delimited between long. 139°50' 30.8500" E and long. 139° 50' 40.0000" E and between lat. 35° 25' 25.9000" N and lat. 35° 25' 30.3000" N.

When the reference ID fulfills the identification conditions defined by the call ID, the message information following the address information, e.g. the message 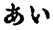 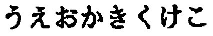 (a, i, u, e, o, ka, ki, ku, ke, ko) in the above case shown in FIG. 6A is stored in the RAM 302.

Of course, the pager terminal 3 may be configured such that similarly to the case of the personal ID and the group ID, message information is stored in advance and when matching between the reference ID and the call ID does not occur, the message information is deleted.

As described above, the page terminal 3 receives the paging call signal 230 and when any of the reference IDs thereof fulfills the identification conditions defined by a call ID, the pager terminal 3 carries out processing in response to the paging call signal 230.

That is, in the case of a paging call made by a personal ID or a group ID, when matching between the call ID and a reference ID stored in the pager terminal 3 for answering the personal ID or the group ID occurs, or alternatively in the case of a paging call made by an area ID, when a value of the reference ID calculated based on the result of determination of a position or location of the pager terminal 3 corresponds to a position within an area designated by the call ID, the pager terminal 3 determines that the received paging call signal 230 is one intended therefor and carries out processing according to the paging call signal 230.

Moreover, as shown in FIG. 7, the pager terminal 3 may be provided with an alerting circuit 35 comprised of an liquid crystal display (LCD), a beeper and/or a vibrator, for respectively outputting visual, audible, and/or mechanical alert signals (i.e. a message, sound and/or vibration) 303 when a paging call signal 230 intended for the pager terminal 3 is received, and various kinds of selector switches, not shown, similarly to a conventional one-way pager terminal has.

In this example, when the pager terminal 3 determines that the received paging call signal 230 is the call signal addressed thereto, the pager terminal 3 can carry out the same processing as carried by the conventional pager terminal, that is, it can output an alerting sound, vibrations, or display messages to alert the user to the presence of an incoming message.

Further, the above construction of the present embodiment can be implemented simply by adding a GPS-receiving block 31 and a capability for processing received GPS signals 500 to the conventional pager terminal. Therefore, it is possible to easily apply this technique to a conventional paging system. Furthermore, similarly to the conventional pager terminal, call IDs and reference IDs are digitized information (encoded information), so that it is easy to deal with these IDs in the information processing block of the terminal, and hence it is easy to carry processing for signal identification, storage of processed information, and so forth.

Still further, call IDs used in the paging system 1 are encoded information, whereby similarly to the conventional paging system, information is easy to make compact, and at the same time, the paging call signal 230 containing the encoded call IDs is a noise-resistant signal.

Moreover, the pager terminal 3 is capable of determining its own position based on GPS signals 500 received from a plurality of (three) GPS satellites 5. This enables the pager terminal 3 to have a variable reference ID (variable identification information: variable ID) which varies in accordance with results of the determination of the position of the pager terminal 3.

As a result, by defining a call ID included in a paging call signal 230 such that identification conditions thereof are fulfilled only when the pager terminal 3 is located within a predetermined area, the pager terminal 3 obtains different results of identification depending on the different positions of the pager terminal 3.

It is obvious that not a predetermined range (area) but a predetermined position or a position on a predetermined line can be designated (e.g. by setting an upper limit value and a lower limit value of a range of each of the east longitude and/or the north latitude shown in FIG. 6A to an identical value).

If a plurality of paging call signals 230 having respective different call IDs are sent such that identification conditions of each different call ID can be fulfilled by the variable ID of the pager terminal 3 depending on the position of the pager terminal 3, a different paging call signal 230 can be determined to be addressed to the pager terminal 3 in a manner dependent on the position thereof.

For instance, in FIG. 2, when the radio station 23a transmits paging call signals 230 having respective area IDs designating a more narrowly defined destination areas SAa1, area SAa2, SAa3, and SAa4 as the call IDs thereof, pager terminals 3 in one destination area (e.g. SAa1) carry out processing (e.g. extraction of message information) responsive to a specific paging call signal 230 different from those received by the other pager terminals 3 in the other areas (e.g. SA2, etc.).

Therefore, if a plurality of predetermined destination areas similar to the more narrowly defined destination areas SAa1 are set within the service area SAa or the like to thereby send paging call signals 230 including call IDs designating positions or areas, the paging call signals 230 can be exclusively addressed to the pager terminals 3 located in the designated positions or areas, which makes it possible to send service information or the like which is closely related to communities in the designated areas as message information.

As a result, according to the paging system 1, through utilizing facilities of the conventional paging system, or alternatively constructing equivalent facilities, services closely related to communities in more narrowly defined areas can be made available by using the pager terminals 3 which can respond to different paging call signals 230 depending on the positions thereof.

For instance, the paging system 1 can be used to provide service information, such as information of weather and regional information, for the destination area SAa1, and so forth. Further, the paging system 1 can be systematically utilized via the telephone network 4 or the like for networks for providing door-to-door delivery services, patrolling, fire-fighting as well as for informing local people of evacuation areas and routes in case of emergency, e.g. when a disaster occurs.

If the ranges of the east longitude and north latitude shown in FIG. 6A are expanded or reduced to thereby change the size of a predetermined area designated e.g. as SAa1 or the like, it is possible to change the size of a unit area for services from the most narrowly defined area to the most widely defined area without making any alterations to the existing facilities or the like.

This makes it possible to provide services for more narrowly defined areas and more widely defined areas irrespective of areas for which the radio stations 23 are responsible, and hence, if each radio station 23a or the like shown in FIG. 2 has sufficient radio-transmitting capability, for instance, the most widely defined service area may be as wide as a prefecture. That is, irrespective of the construction of the existing paging systems, they can be utilized as they are, so long as paging call signals 230 can be transmitted and received.

Further, as a result, e.g. when the radio stations 23 are desired to be decreased in number so as to reduce running costs or for like reasons, the distribution of the radio stations 23 can be thinned to expand an area covered by each of the remaining radio stations 23. Thus, it is possible to set the service area to be covered by the radio stations 23 more freely.

Conventionally, the service (radio) frequency used in the paging system is varied with the service area, and hence when each pager terminal 3 crosses the boundary of a destination area to enter the same, it is required to change receiving frequency thereof by using a manual or automatic scan. According to the present embodiment, however, each pager terminal 3 is capable of determining whether a paging call signal 230 is addressed thereto, with reference to present position thereof, so that there is no need to change the receiving frequency of the pager terminal 3.

Therefore, it is possible to prevent an increase in the number of service frequencies, and at the same time, e.g. in a destination area SAa4 or the like shown in FIG. 2, it is possible to set the receiving frequency from a radio station 23a and that from a radio station 23b to an identical one to thereby allow the pager terminal 3 to receive a paging signal without changing the receiving frequency thereof.

Although the paging system 1 is basically constructed as described above, the construction and capabilities thereof can be changed or new component elements can be added thereto to adapt the paging system 1 to various applications so long as the change and addition do not depart from the scope of the invention. In the following, such applications of the invention will be described.

First, as an applied form of the above pager terminal 3, another example will be described. A pager terminal 3 used here is distinguished from the pager terminal 3 used in the first example in that it has an additional capability of extracting information of a paging call signal already sent to a predetermined area (destination area) before the pager terminal 3 enters the predetermined area, after the pager terminal 3 enters the predetermined area. The pager terminal 3 having the additional capability is employed in a paging system 1 according to the second embodiment.

The pager terminal 3 used in the second example basically has the same construction as the pager terminal 3 described above with reference to FIG. 7, and it includes an information processing block 30 for processing various kinds of information, a GPS signal-receiving block 31 for receiving GPS signals 500, a paging call signal-receiving block 32 for receiving a paging call signal 230, a power supply circuit 34 for supplying power from a battery 341 or the like to each component parts of the pager terminal 3, and an alerting circuit 35 for outputting alerting signals (a message, alerting sound and vibration) 303.

However, a RAM 302 of the pager terminal 3 used here stores not only present position information but also position information obtained from results of the immediately preceding determination of the position of the pager terminal 3 (e.g. carried out two minutes before), and a CPU 301 determines a moving speed and a direction of travel of the pager terminal 3 based on the above plurality of (two) pieces of position information.

For instance, assuming that a wearer of the pager terminal 3 is moving on foot, the moving speed (4800 m/h) is calculated from the difference in time (two minutes in the above case) and the difference in position (distance: e.g. 160 m), and the direction of travel (e.g. a due east direction, a northeast direction, or information expressed by an angle measured in the counterclockwise direction from the reference direction of the due east set to a direction of 0 degree) is obtained from a direction of the present position where the present determination of the position is effected as viewed from a position where the immediately preceding determination of the position was carried out.

Next, the CPU 301 generates receiving area information defining the receiving area, based on the above position information, moving speed (e.g. 4800 m/h) and direction of travel (e.g. the due east direction) at the present time point. An image of the receiving area is shown in FIG. 8.

For instance, assuming that the pager terminal 3 shown in the figure is at a location of the present determination of the position of the pager terminal 3 (e.g. at long. 139° 30'E, lat. 36°40'N), an area where the pager terminal 3 can be moved at the above moving speed (4800 m/h) within a predetermined time period (e.g. 30 minutes) is represented by a circular area, such as a receiving area RA3 as shown in FIG. 8, which has a center starting point) located at the above location of the present determination of the position, and a radius (e.g. 2400 m; which is referred to as "deviation value") corresponding to a distance over which the pager terminal 3 can be moved within the predetermined time period.

According to the pager terminal 3, however, the element of the direction of travel of the pager terminal 3 is also taken into account in determining the receiving area an example of which is illustrated as a receiving area RA1 in the figure. The receiving area RA1 is longer (with a distance of e.g. 4800 m: corresponding to an hour' s travel on foot) in the direction of travel of the pager terminal 3 (in the due east direction in the above example) and shorter (with a distance of e.g. 1200 to 1600 m: corresponding to 15 to 20 minutes' travel on foot) in the opposite direction thereto.

In this case, as shown in FIG. 8, the receiving area RA1 is an elliptical area which has a center deviated (by 1800 m: corresponding to 22.5 minutes' travel on foot) from the starting point (present position) in the direction of travel thereof, with the major axis (6000 m: corresponding to 1 hour 15 minutes' travel on foot) extending in the east-west direction and the minor axis (3200 m: corresponding to 40 minutes' travel on foot) extending in the north-south direction. Further, if the moving speed of the pager terminal 3 and the direction of travel thereof are different from the above example, the receiving area can be e.g. a receiving area RA2 (when the pager terminal 3 is moving at a lower speed in the due north direction).

Naturally, each of the major and minor axes of the receiving area may be increased in size (i.e. the predetermined time period may be set to a longer time period) to thereby define e.g. a receiving area RA4 as shown in the FIG. 8, or alternatively, it is possible to form not a circular or elliptical receiving area as shown in FIG. 8 but a rectangular receiving area, which is easy to calculate, to define the receiving area.

The CPU 301 stores the position information and the receiving area information defining the receiving area (e.g. RA1) as described above in the RAM 302.

The CPU 301 operates in association with an identification information-processing circuit 320 of the paging call signal-receiving block 32 shown in FIG. 7, as described above, not only to determine whether or not a paging call signal 230 received is a call signal addressed to i.e. intended for the pager terminal 3, but also to store the present call ID and the present message information together with time information in the RAM 302 provided that the call ID of the paging call signal 230 is an area ID.

In this case, when the call ID is determined to be a personal ID or a group ID and at the same time matching of the same with a reference ID of the pager terminal 3 occurs, the pager terminal 3 carries out similar processing as carried out by the conventional pager terminal, i.e. carries out an audible alert by sound, a mechanical alert by vibration or a visual alert by displaying a message.

On the other hand, when the call ID is determined to be an area ID, that is, when the function bit FB = [1, 1], first, the above-mentioned receiving area information is read out from the RAM 302. However, differently from the case of the above personal ID or the group ID, it is determined whether or not a destination area defined by the area ID and the receiving area defined by the receiving area information overlap each other.

For instance, as shown in FIG. 8, when the receiving area RA1 shown in the figure is defined for the pager terminal 3, if an area ID received designates a destination area SAa5 or a destination area SAa7, there is no overlapping portion therebetween. On the other hand, when the received area ID designates a destination area SAa6, there is an overlapping area XA1 therebetween.

When there is an overlapping area, the CPU 301 stores the area ID and the message information corresponding thereto as the present call ID and the present message information together with the time information in the RAM 302. At this time point, however, the received paging call signal 230 is not yet determined to be a call signal intended for the pager terminal 3 and hence no alerting sound, vibration or message is generated.

As described above, when the pager terminal 3 receives a GPS signal 500, the CPU 301 generates position information of the pager terminal 3 and determines a moving speed and a direction of travel thereof to generate receiving area information, and at the same time, when the pager terminal 3 receives a paging call signal 230, it determines whether a call ID contained therein is a personal ID or an area ID, and carries out processing responsive to the call ID.

Further, when the CPU 301 has stored message information corresponding to a new (present) call ID (area ID) together with the time information of a time point at which the determination of the position is carried out in the RAM 302, and/or when the CPU 301 has received the GPS signal, and/or regularly (e.g. every 2 minutes), the CPU 301 reads out the latest position information to use the same as a reference ID (variable ID) to thereby determine whether or not the reference ID fulfills identification conditions defined by the call IDs (area IDs) stored in the RAM 302.

In this process, the area IDs to be determined as to whether they are area IDs intended for the pager terminal 3 are area IDs which were stored in the RAM 302 not longer than a predetermined time period before the time point of this determination. For instance, in the case of FIG. 8, the maximum time period of the predetermined time period in the receiving area RA1 is one hour in the due east direction, and hence area IDs stored during a time period from one hour before the present time point to the present time point are set to area IDs to be determined in the above-mentioned respect.

Inversely, if the pager terminal 3 has been moved in the east direction, for instance, as described above, and it is now located in the overlapping area XA1 shown in FIG. 8, it implies that the pager terminal 3 was located at the position referred to hereinabove with reference to FIG. 8 an hour before the present time point.

In this case, information (an area ID and message information) of the paging call signal 230 which was addressed to the overlapping area XA1 an hour before the present time point with designation of the destination area, that is, information of the paging call signal 230 sent with designation of the destination area SAa6 has already been stored in the RAM 302 of the pager terminal 3 according to the definition of the receiving area RA1 of the pager terminal 3 at that time point.

That is, when the pager terminal 3 is located in the overlapping area XA1 at the present time point, if it is determined that the present variable ID (position information) fulfills identification conditions of a destination area designated by any of the area IDs (call IDs) stored from the predetermined time period (one hour in the above example) before the present time point up to the present time point, information sent by the paging call signal 230 with designation of the destination area by the area ID is judged to be intended for the present pager terminal 3.

Therefore, although the pager terminal 3 was not located in the destination area SAa6 one hour before the present time point, message information addressed to this destination area with designation of the area ID at that time can be extracted similarly to the case of the pager terminal 3 having been located in the destination area SAa6 then, and hence the pager terminal 3 generates an alerting sound, vibration or message to alert the user to the presence of an incoming message. For instance, in the example shown in FIG. 6A, the message 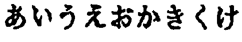 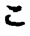 .... (a, i, u, e, o, ka, ki, ku, ke, ko,....) can be displayed.

Further, in the above case, since the pager terminal 3 has been moving from the position shown in FIG. 8 toward the overlapping area XA1 over a time period between one hour before and the present time point, the receiving area RA1 of the pager terminal 3 and the destination area SAa6 have continued overlapping each other.

Therefore, the pager terminal 3 should also have stored message information which has been addressed to the destination area SAa6 with designation of the area ID during the above time period, and at the above-mentioned present time point the identification conditions of the destination area (SAa6) designated by the area ID received all this while are also fulfilled to permit extraction of the stored message information.

In short, the pager terminal 3 also stores message information corresponding to the area ID sent with designation of the destination area SAa6 from one hour before up to the present time period, thereby permitting the stored message information to be extracted.

Therefore, although the pager terminal 3 has just entered the destination area SAa6, it can extract information sent from one hour before up to the present time point with designation of the destination area SAa6 as if it had been located in the destination area SAa6 all the while.

Although in the above case, description is made of an example in which the receiving area is defined as the receiving area RA1 shown in FIG. 8, it goes without saying that if the receiving area is defined as the receiving area RA4, for instance, even when the pager terminal 3 changes the direction of travel thereof on the way to enter the destination area SAa5 or the destination area SAa7, the existence of an overlapping area XA45 and an overlapping area XA47 enable the above-mentioned extraction of message information.

It should be noted that when the pager terminal 3 changes direction on the way to move to the destination area SAa7, as described above, a receiving area (in the same direction as the receiving area RA2 but slightly larger in size when applied to the above-described example) is defined at the time point of change of the direction, such that information related to the direction of travel can be more easily collected. Therefore the pager terminal 3 does not necessitate a large-sized receiving area.

As described above, according to the pager terminal (mobile terminal) 3, it is possible to extract message information sent to a destination area which was designated before the pager terminal has moved to the area, based on call IDs (call identification information) sequentially stored, regardless of a time point at which each paging call signal 230 is sent.

That is, according to the pager terminal 3, information of a paging call signal 230 sent to a predetermined area with designation of the area before the pager terminal 3 enters the same can be extracted after the pager terminal 3 enters the area.

Now, the function (operation) and advantageous effects of the above-mentioned pager terminal 3 using the same will be summarized hereinafter.

The pager terminal 3 receives paging call signals 230 to sequentially store call IDs included in the paging call signals 230 and message information corresponding to the call IDs. Further, when a variable ID fulfills identification conditions defined by any of the call IDs stored, the pager terminal 3 extracts the message information corresponding to the call ID as the message information intended therefor.

The variable ID is varied according to a result of determination of the position of the pager terminal 3 and hence a result of determination as to whether or not the variable ID fulfills identification conditions defined by an identical call ID depends on the position of the pager terminal 3. Further, when the variable ID fulfills identification conditions, a call ID defining the identification conditions and message information extracted according to the call ID depends on the position of the pager terminal 3.

On the other hand, since identification conditions to be defined by a call ID include a destination area, when the variable ID dependent on the result of determination of the position of the pager terminal 3 fulfills the condition of a destination area designated by the call ID, i.e. when the result of determination of the position of the pager terminal 3 agrees with the destination area designated by the call ID, it is determined that the variable ID fulfills the identification conditions.

In this case, similarly to the above-mentioned first embodiment, in FIG. 2, for instance, pager terminals 3 in each destination area (e.g. SAa) carry out processing (e.g. extraction of message information or the like) responsive to a paging call signal 230 different from those received by the other pager terminals 3 positioned in the other areas (e.g. SAb, etc.).

Therefore, if a plurality of paging call signals 230 having call IDs designating different destination areas are sent, the pager terminal 3 can extract message information of a paging call signal 230 varying with the position thereof as one intended therefor.

As a result, according to the paging system 1 (mobile communications system) of this example, similarly to the first example a plurality of destination areas, such as the destination areas SAa1 and SAa2, are defined in the service area SAa or the like to send paging call signals 230 including call IDs designating the respective destination areas. This enables the paging system 1 to provide networks for announcing information of various services, door-to-door delivery, patrolling, fire-fighting as well as for informing local people of evacuation areas and routes in case of emergency, such as occurrence of a disaster. In short, services more closely related to communities in the more narrowly defined areas can be provided.

Similarly to the first case, the size of a destination area designated by an area ID can be changed, whereby it is possible to change the size of a unit area for the above-mentioned or other services without making any alterations to the existing facilities or the like.

Further, similarly to the first case, it is possible to provide services both for more narrowly defined areas and for more widely defined areas irrespective of the ranges of areas covered by the radio stations 23, and hence, irrespective of how the existing paging systems are configured, they can be utilized as they are so long as paging call signals 230 are made available. Moreover, the areas to be covered by the radio stations 23, can be arranged in a more flexible manner e.g. by thinning the distribution of the radio stations 23 to thereby expand an area covered by each of the remaining radio stations 23.

Furthermore, the pager terminal 3 carries out the determination of an ID matching or valid correlation of a paging call signal 230 based on the present position thereof, so that even if the pager terminal 3 goes beyond the boundary of a destination area, there is no need to change the receiving frequency thereof, which prevents an increase in the number of service frequencies used by the paging system 1.

Still further, the pager terminal 3 can be configured simply by additionally providing a capability of processing received GPS signals 500 to the conventional pager terminal. Therefore, the pager terminal 3 can be easily utilized in the conventional paging system, and similarly to the conventional paging system, the paging system of the present case can easily make information compact, and at the same time, the paging call signal 230 containing the encoded call IDs noise-resistant.

According to the pager terminal 3 here, call IDs included in paging call signals 230 received and pieces of message information corresponding to the respective call IDs are sequentially stored, and hence if call IDs designating destination areas different from each other are stored, when the pager terminal 3 has moved to a different position, if the destination area designated by one of the stored call IDs corresponds to the different position, message information corresponding to this call ID can be extracted.

Therefore, according to the pager terminal 3, it is possible to extract message information having designated an area corresponding to the present position of the pager terminal 3 as a destination area, based on call IDs sequentially stored in the pager terminal, in spite of time points at which the respective paging call signals 230 are received.

That is, according to the pager terminal 3, information of a paging call signal 230 sent to a predetermined area with designation of the area before the pager terminal 3 enters the same can be extracted after the pager terminal 3 enters the area.

Further, according to the pager terminal 3, when a destination area (e.g. SAa6) of a call ID and a receiving area (e.g. RA1) of the pager terminal 3 overlap each other (e.g. when there is an overlapping area XA1), the call ID and message information corresponding to the call ID are stored and hence it is possible to reduce the number of call IDs and the number of pieces of message information to be sequentially stored, through definition of the receiving area. This makes it possible to prevent storage of superfluous information to thereby permit focusing on information required to be processed for identifying operation or the like. This makes it possible to enhance processing speed as well as save the memory area of the pager terminal 3.

Further, since the receiving area depends on the result of determination of the position of the pager terminal 3, the movement of the pager terminal 3, that is, the change in the position of the pager terminal 3 causes the receiving area to be changed (moved), whereby even when the pager terminal 3 moves (even when the position thereof is changed), it is possible to secure a receiving area for receiving necessary information beforehand. This makes it possible to receive in advance information which will be required when the pager terminal 3 has further changed its position, that is, message information designating an area, as a destination area, to which the pager terminal is to be moved, thereby enabling the pager terminal 3 to extract the message information after entering the area.

According to the pager terminal 3, receiving area information includes a deviation value which defines a receiving area with reference to the determined position of the pager terminal 3 as a starting point from which the pager terminal 3 is to be moved or deviated in position. That is, the receiving area is defined by the deviation value.

More specifically, the deviation value from a starting point (e.g. at long.139°30'E, lat.36°40'N, etc.) can be defined by a distance (length) in each direction (for instance, in the above example, a distance of 4800 m in the east direction, a distance of 1200 m in the west direction) . Alternatively, the same may be defined by designating the range of a deviation in units of measurement of length (e. g. -500 to +350 m in a direction of the east longitude, -7500 to +5000 m in a direction of the north latitude), or in units of measurement of the longitude and the latitude (e.g. -5'30.5500" to +2'20.4000" in the direction of the east longitude, -3'45.3030" to +6'50.6000" in the direction of the north latitude).

It should be noted that in the above case, similarly to the definition of the destination area described hereinabove, the receiving area may be defined as a rectangular area by using a distance in the east-west direction as the length of the upper side and the lower side of a rectangle and a distance in the north-south direction as the length of the right-hand side and the left-hand side of the rectangle, or alternatively as an elliptical area by using one of the range of the distances in the east-west direction and in the north-south direction as the major axis of an ellipse, and the other as the minor axis thereof.

Further, by taking into account a direction of advance (movement) in addition to a range of extension in the east-west direction and the north-south direction, a length in the direction of travel may be defined as a long side of a rectangle or the major axis of an ellipse and a length in a transverse direction to the direction of travel may be defined as a short side of the rectangle or the minor axis of the ellipse to thereby determine the rectangular area or the elliptical area as the receiving area.

More specifically, in the case of the receiving area RA1 described above with reference to FIG. 8, since the pager terminal 3 is moving in the east direction, the length in the east-west direction is determined as the major axis of an ellipse and the length in the north-south direction is determined as the minor axis of the ellipse to define the elliptical area as the receiving area RA1. However, if the pager terminal 3 is moving in the northeast direction, for instance, the length in a direction of from the southwest to the northeast may be determined as the major axis of an ellipse and the length in a direction of from the northwest to the southeast may be determined as the minor axis of the ellipse to thereby shift the center of the ellipse (point of intersection of the major axis and the minor axis) from the present position (the position of the pager terminal 3 determined at the present time point) in the northeast direction along the major axis of the ellipse.

Further, the sender or source of a paging call signal 230 has a limited sending capability and hence the deviation or distance in only one to three directions from the starting point (present position) may be defined (with deviation values or distances in the other directions being up to respective limits dependent on the limited sending capability of the sender; for instance, i.e. -5'30.5500" in the only one direction along the east longitude may be defined) . Furthermore, it is possible to define a circular receiving area which has a center located at the starting point with a radius of a deviation value (e.g. 3000 m, etc.)

According to the pager terminal 3, the receiving area (e.g. the receiving area RA1 shown in FIG. 8) is defined as an area to which the pager terminal 3 can be moved within a predetermined time period from the latest determined position of the pager terminal. That is, the receiving area is limited to a range within which the pager terminal 3 can be moved in the predetermined time period.

In general, the importance of information and the applicability of contents thereof to the present situation varies with the lapse of time, and accordingly, as time elapses after the sending of the information, the same information can become useless or rather it can present an obstacle to comprehension of the present situation. The same applies to urgent information in case of emergency, such as occurrence of a disaster as well as to daily service information, such as weather reports.

Therefore, according to the pager terminal 3, the receiving area is defined as an area to which the pager terminal 3 can be moved from the latest determined position of the pager terminal 3 within a predetermined time period so as to disregard information sent to other areas outside the receiving area. This makes it possible to further reduce the number of call IDs and message information sequentially stored, so that the storage of superfluous information is prevented to permit focusing on information to be processed for identifying operation. This makes it possible to enhance processing speed as well as save the memory area of the pager terminal 3.

According to the pager terminal 3, call IDs and message information are stored for a predetermined time period (for an hour in the above example) to use the same in signal-identifying processing and the extraction of message information by using a variable ID. According to the pager terminal 3, as described above, the receiving area is defined as an area to which the pager terminal 3 can be moved from the latest determined position of the pager terminal 3 in a predetermined time period, and hence call IDs whose destination areas are on a path through which the pager terminal 3 passes within the predetermined time period and pieces of message information corresponding to the call IDs are utilized for the signal-identifying processing and the extraction of message information at the time point of the pager terminal entering or passing the destination area of each call ID, and change into used information after the lapse of the predetermined time period.

For instance, there is an overlapping area XA1 in the above-mentioned example, and hence an area ID (call ID) designating the destination area SAa6 at the position of the pager terminal 3 shown in FIG. 8 and message information combined therewith are stored. However, at a time point of the pager terminal 3 having entered the destination area SAa6 (after the lapse of the predetermined time period: after an hour in the above example), the condition of the destination area specified by the area ID is fulfilled and the message information corresponding to the area ID is extracted for use, thereby making the area ID and the message information used information.

Inversely, call IDs and pieces of message information corresponding to the call IDs which have not been used in the identifying processing during the predetermined time period are not required to be stored, since the predetermined time period has passed to make them useless or obstacles to comprehension of the present situation.

That is, stored call IDs and pieces of message information corresponding to the call IDs become useless information after the lapse of the predetermined time period from a time point of receiving each call ID, and hence, according to the pager terminal 3, the above information is stored only for the predetermined time period, whereby the memory area of the pager terminal 3 can be saved. Moreover, the pager terminal 3 may be configured such that information after the lapse of the predetermined time period is positively deleted or may be left unprocessed so as to be overwritten by subsequently stored information.

Further, according to the pager terminal 3, the moving speed and/or the direction of travel of the pager terminal 3 are determined based on the received GPS signals.

For instance, when the moving speed of the pager terminal 3 is determined (e.g. 4800 m/h in the above-described example) which is employed in defining the destination area RA1 described hereinabove with reference to FIG. 8, the distance (4800 m) between a position of the pager terminal 3 (the position of the overlapping area XA1) at a given time in the future (e.g. after an hour) and the present position of the pager terminal 3 can be estimated, which makes it easier to define the size of a receiving area within which required information is to be obtained.

On the other hand, when the direction of travel of the pager terminal 3 (due east direction in the above example) is determined, there is a large possibility that information concerning the direction of travel becomes more important than other information and hence it is possible to define the receiving area (RA1) such that it is larger in size in the direction of travel of the pager terminal 3.

Therefore, according to the pager terminal 3, it is possible to easily and suitably define a receiving area based on the determined position of the pager terminal 3, the moving speed and/or the direction of travel of the pager terminal 3.

Further, according to the pager terminal 3, a plurality pieces of position information (for instance, in the above-mentioned example, a piece of position information generated from the immediately preceding determination of the position of the pager terminal 3 and the other piece of position information generated at the present time point) the pager terminal 3 generated at different time points are stored, whereby it is possible to easily determine the moving speed (4800 m/h) from a difference in time point (2 minutes in the above example) and a difference in position (distance: 160 m in the above example) or determine the direction of travel (the due east direction in the same) by the direction from a position where the immediately preceding determination of the position of the pager terminal 3 is carried out to a position where the present determination of the position is carried out.

It should be noted that the construction and functions of the above pager terminal 3 and paging system 1 according to the second example will now be changed to add new component parts and elements to the same, to thereby adapt the same to various other uses. Now, such modifications or applications will be described hereinafter.

First, according to the pager terminal 3, it is possible to change the predetermined time period used in defining the receiving area depending on the amount of information of the above-mentioned call, IDs and/or the amount of message information, which are to be sequentially stored within a unit time period.

For instance, in FIG. 2, assuming that the pager terminal 3 located in a destination area SAa2 advances toward the destination area SAa4 by way of the destination area SAa1, the pager terminal 3 is supposed to take thirty minutes to reach the destination area SAa1 and an hour to reach the destination area SAa4.

In this case, of the two pieces of information, that is, information as to a location (area SAa4) for the pager terminal 3 to reach after an hour and information as to a location (area SAa1) for the pager terminal 3 to reach after thirty minutes, normally the latter is more urgent and important information to the pager terminal 3.

The amount of information which can be stored in the pager terminal 3 is naturally limited, and hence, where there is a large amount of information received within the unit time period, it is often preferable that priority is be given to information related to an area where the pager terminal 3 will reach in a nearer future.

Therefore, according to the above pager terminal 3, the predetermined time period is changed in accordance with the amount of information sequentially stored within the unit time period to thereby vary the size of the receiving area, which makes it easy to store information with higher priority.

For instance, in the above example, assuming that a large-sized destination area that is so large in size as will have an overlapping area with the destination area SAa4 is first defined (provided that the predetermined time period is one hour in this case), if there is an excessively large amount of information sent to the destination area SAa4 by paging call signals that designate the destination area SAa4, the memory area of the pager terminal 3 is used so as to store the information, so that there can occur a problem that the destination area SAa4-designating information sent later can not be stored due to the violation of a limit of the memory capacity of the memory area.

According to the pager terminal 3, when there is a large amount of information to be stored, i.e. information is received at a high rate for storage, as described above, the predetermined time period is shortened, that is, the receiving area is decreased in size. This makes it possible to avoid such an inconvenience that the storage of information with lower priority results in exhausted memory, causing hindering the storage of information with higher priority. Further, if there is a small amount of information to be stored, i.e. information is received at a low rate for storage, the receiving area can be increased in size to thereby permit more extensive information to be stored (to be obtained).

Next, although in the above pager terminal 3 the receiving area is defined, it is possible to provide a receiving area which is not defined, conversely, the receiving area can be set to a whole service area. In such a case, it is possible to obtain all the destination area-designating information as well as extract message information sent by paging call signals including destination area-designating information, wherever the destination is located.

By carrying this idea further forward, the pager terminal may be constructed such that message information can be extracted immediately after the same is received, before the pager terminal is moved to the destination. In this case, however, it is likely that there is an excessively large amount of information displayed as messages, resulting in troublesome and complicated processing, which can prevent comprehension of important information.

Therefore, the pager terminal may be configured such that the receiving area is defined, and all the information received in the receiving area can be extracted. Further, in this case, it is convenient if the size of the receiving area can be changed as desired.

According to the pager terminal 3 (mobile terminal) of the above embodiment, the receiving area including the position of the pager terminal therein is defined and when the receiving area and a destination area of a call ID overlap each other, message information corresponding to the call ID can be extracted as information intended for the pager terminal 3 and at the same time the size of the receiving area can be changed. Therefore, through receiving a paging call signal 230 designating the destination area, it is possible to extract information designating a desired area.

This makes it possible to change the size of the receiving area from a wide range to a narrow one on the terminal side, so that, for instance, information specific to an area toward which the pager terminal 3 is moving can be extracted in advance.

In this connection, receiving area size-changing means in this embodiment can be simply realized by configuring the pager terminal 3 such that the user is capable of increasing or decreasing the size of a receiving area located in a selected one of four directions from a starting point located at the position of the pager terminal 3 by operating a corresponding one of arrow keys oriented in the respective four directions and one of size-increasing/decreasing keys while watching the size of the receiving area displayed on the screen.

Of course, the pager terminal 3 according to the above embodiment also can be provided with the receiving area size-changing means of the above-mentioned kind.

Further, although according to the pager terminal 3 of the above-mentioned embodiment, the moving speed and the direction of travel thereof are determined from a plurality of pieces of position information, the same may be determined from Doppler information obtained from the GPS signals 500.

That is, information that can be obtained from the GPS signals 500 includes not only the present position of the pager terminal 3 but also the instantaneous velocity and the direction of travel of the page terminal 3 extracted from the Doppler information. Therefore, according to the pager terminal 3 of this embodiment, the moving speed and the direction of travel thereof can be easily obtained from the Doppler information of the GPS signals 500.

Further, although according to the pager terminal 3 of the above-mentioned embodiment, the receiving area is defined by paging area information including a deviation value determined with reference to the starting point set to the determined position of the pager terminal 3, this is not limitative, but the receiving area may be defined by a lower limit value and/or an upper limit value of information of the position of the pager terminal 3.

In this embodiment, the receiving area is defined e.g. between long. 139°30'30.8500"E and long. 139°30'40.0000"E and between lat. 36°25'25.9000"N and lat. 36°25' 30.3000"N. However, the receiving area may be defined by only one of the lower limit value and the upper limit value of the position information of the pager terminal 3. Further, the receiving area may have a rectangular shape or an elliptical shape (including a circular one). Furthermore, the receiving area can be formed in an inclined manner by taking the direction of travel of the pager terminal 3 into account.

Further, the receiving area can be defined by the position information hierarchically expressed. In the case of hierarchical definition e.g. of Prefecture A, City B, Town C, Street D, House number E, the receiving area may be defined such as Prefecture A, City B, Town C, Street D (whole area of Street D regardless of house numbers therein) or Prefecture A, City B, Town C (a whole district of Town C). Further, the same may be also defined as follows: Prefecture A, City B, Towns C and G (whole area of Towns C and G) or Prefecture A, City B, Towns C to H (whole area of Towns C to H). Of course, it is possible to define the same such as Prefecture A, Cities B to I or Prefectures A, to J, i.e. as more-widely defined areas.

Therefore, according to the pager terminal 3 of this embodiment, by contriving methods of hierarchically defining receiving areas, it is possible to define receiving areas in a manner closely related to community life or by intuitively understandable expressions.

On the other hand, the definition of the destination area according to the second example can also be changed in various fashions. This destination area is applicable to the first example and hence in the following description the destination area is explained as an application to the two examples.

For instance, as a format of a call ID designating a destination area, that is, as that of an area ID, in the above case of FIG. 6A, a data format defining a lower limit value and a upper limit value of two-dimensional position information is adopted. However, three- or more- dimensional position information containing information of an altitude or the like may be adopted.

In the above described example, if at least one of a lower limit value of the longitude, an upper limit value of the longitude, and a lower limit value of the latitude and an upper limit value of the latitude is designated, it is possible to discriminate between a designated area and an undesignated area in a service area. That is, the pager terminal 3 can easily limit a designated area by using a lower limit value or an upper limit value of information related to the location of the pager terminal 3.

As a result, the pager terminal 3 can easily determine whether or not a variable ID corresponding to a result of determination of the position of the pager terminal 3 fulfills the condition of a destination area designated by a call ID (according to the first example) which has just been received or a stored call ID (according to the second example), so that the pager terminal 3 can extract message information corresponding to the call ID with ease. Similarly to the receiving area, the destination area may have a rectangular shape or an elliptical shape (including a circular one), or alternatively the same can be formed in a tilted or biased manner by taking into account relationship between the same and the service area SAa or the like.

Further, as shown in FIG. 6B, the starting point may be defined (e.g. at long. 139° 50'E and lat. 36°00'N) to determine a longitudinal range and a latitudinal range based on deviation values (longitudinal range: -7750 to -7500m, latitudinal range: -37000 to -36750 m, etc.) from the starting point for designating a destination area, thereafter providing message information, such as " 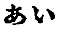 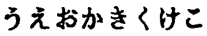 " (a, i, u, e, o, ka, ki, ku, ke, ko) .

This method of defining a destination area by using a starting point and deviation values therefrom is employed in a Tokyo 23 Wards Detailed Map and the like so that each destination area is expressed by the method familiar to the users or subscribers. Further, in this case, when a contract area is not very wide, it is possible to employ a fixed starting point to designate a destination area by using only deviation values. Naturally, the destination area thus defined may have a rectangular shape or an elliptical shape (including a circular one) or the same can be formed in a tilted or biased manner.

Referring to FIG. 6C, the destination area may be designated in a hierarchically defined form in an expression reflecting daily life. For instance, a prefecture ID, a city (or a ward) ID, a town (or a village) ID, a street ID, a house number ID and the like may be used, followed by providing a message "ABCDEFGH....".

Further, when a call is made by an area ID, a destination area may be designated together with characteristic IDs which define specific conditions concerning the area. The characteristic IDs include regional characteristics, such as characteristics characterizing the destination area as an area along a sea coast or as an area along mountains. If such a characteristic ID defined by the regional characteristics is determined beforehand, e.g. when the destination area is attacked by a disaster, such as a tsunami (tidal wave) or a snow avalanche, it becomes possible to provide urgent information only for communities related to the disaster even by interrupting other service information.

The characteristic IDs can be used to provide services information in a manner dependent on occupation, income, age difference between children, school difference or the like. That is, these characteristic IDs can be used for providing specific services information only for pager subscribers or pager contractors fulfilling more specific conditions in the designated area. The above characteristic IDs can be used as part of a variable ID in determining whether or not the identification conditions defined by a call ID is fulfilled, based on contents customized and stored in advance and position information.

Even when an area-designating call ID, that is, a format of an area ID is predetermined, as described above, the identification conditions can be made more strict or more relaxed depending on the situation at the time.

For instance, an unconditional ID the bits of which are all 1's or the like may be determined. Although in the above example shown in FIG. 6A, the destination area is delimited between long. 139°50'30.8500"E and long. 139°50'40.0000"E, if [30.8500] is replaced by the unconditional ID, that is, all 1's, the condition of [30.8500] is disregarded to set the designated area to a range between long. 139°50'E and long. 139°50' 40.0000"E to expand the destination area. If all the designated longitudes are replaced by the unconditional ID, there remains only the condition of lat. 35°25'25.9000"N to lat. 35°25'30.3000"N.

That is, in the above case, although the format of the area ID is determined as viewed in FIG. 6A, by setting the unconditional ID without changing the format of the area ID, it is possible to relax part of the identification conditions.

Similarly, in the example shown in FIG. 6B as well, it is possible to designate the unconditional ID for relaxing part of the identification conditions. Although in the case of FIG. 6B, deviation values in the longitudinal direction and ones in the latitudinal direction are to be designated, it is possible to replace e.g. a deviation value "-7500 m" setting a longitudinal range of "-7750 to -7500 m" by the unconditional ID for setting only one condition "-7750m to" or replace the whole longitudinal range "-7750 to -7500 m" by the unconditional ID for defining a latitudinal range as only one condition.

Further, if any of respective IDs shown in FIG. 6C is replaced by the unconditional ID (e.g. Street ID et seq. are all defined as 1: the town ID is defined as [FF]hex), the identification conditions are relaxed to thereby extend the designated area (for designating the whole region of the city).

Inversely, if all 0' s are defined as a negative ID (for instance, similarly to the above definition, street ID et seq. are all defined as 0), the identification conditions can be determined in a manner limiting the same (such that the city is the only one city where information is not transmitted). Further, the respective IDs shown in FIG. 6C may be identified according to whether the first bit of each ID is equal to 0 or 1.

Therefore, in these cases, by determining an unconditional ID for relaxing part of the identification conditions or a negative ID for limiting the same, even if each call ID for designating areas, that is, each area ID, has a fixed format for identification conditions, it is possible to easily change the area size as a unit of service area between a narrowly-defined area to a widely-defined area.

Further, a plurality of identification conditions of an identical kind or of different kinds defined by the above-mentioned area IDs as call IDs may be arranged in sequence to sequentially designate whether each of the identification conditions is effective or not, by using a characteristic ID or other bit information (condition-setting information).

For instance, in the format of an area ID shown in FIG. 6C, the designation of City A and that of City B may be arranged in sequence and then 2-bit information as condition-setting information may be included. This permits a configuration that only city A is designated by setting the 2-bit condition-setting information to [1, 0], only City B is designated by setting the same to [0, 1], and both City A and City B are designated by setting the same to [1, 1]. The identification conditions set as above are useful e.g. when there are a lot of cities to which service information is required to be sent in a manner discriminating between the cities.

Further, identification conditions not only of an identical kind but also of different kinds may be arranged in sequence, and information having the format of the area ID shown in FIG. 6A, for instance, may be further included in the above-mentioned call ID, whereby when 3-bit condition-setting information is set to [1, 1, 0], an area fulfilling the same conditions as described above can be designated, while when the 3-bit condition-setting information is set to [1, 1, 1], an area covering the whole region of City A and City B and at the same time extending between long. 139° 50' 30.8500" E and long. 139° 50'40.0000"E and between lat. 35° 25'25.9000"N and lat. 35°25'30.3000"N can be designated. Of course, it is also possible to sequentially arrange an area ID shown in FIG. 6B, as well as a characteristic ID divided by regional characteristics and an characteristic ID divided by characteristics paging subscribers both described hereinabove.

Thus, in these cases, by additionally providing condition-setting information in an area-designating call ID (area ID), it is possible to arrange information defining a plurality of identification conditions of an identical kind or of different kinds, to thereby set a variety of identification conditions.

As described above, if a data-processing format for setting conditions generally employed in information processing, such as one based on a technique of setting flags for doing conditional branches, is used, it is possible to contemplate various formats as data formats of area IDs. The use of area IDs designating areas and such conditions enable the invention to be adapted to various kinds of applications so long as it does not depart from the scope of the invention.

As is clear from the above data formats of area IDs, it is possible to adopt various configurations of variable IDs of the pager terminal 3. For instance, all the variable IDs may be formed of position information alone or part of the same may be formed of one or plurality of common IDs, such as the above characteristic IDs dependent on occupation or the like.

In the latter case, each variable ID may be formed of a common ID regardless of areas such that common service information is available to the owner of a pager terminal 3 wherever he (she) may go. Alternatively, a plurality of common IDs may be defined in advance to enable the owner of a pager terminal 3 to obtain different services from area to area by selecting one from the plurality of common IDs according to position information of the pager terminal 3.

In any of the above cases, each variable ID of the pager terminal 3 is configured such that the same includes position information generated in accordance with a result of the latest determination of the position of the pager terminal 3, and hence the variable ID varies according to the result of determination of the position of the pager terminal 3, whereby information of the variable ID is made correspondent to the determined position of the pager terminal 3, which makes it easy to change the result of identification according to different positions of the pager terminal 3.

Further, when the variable IDs fulfill identification conditions as well, it becomes easy to identify a call ID defining the identification conditions including the designation of a destination area based on the varying position of the pager terminal 3, that is, based on position information included in the variable IDs, and at the same time message information corresponding to the call ID can be extracted more easily.

Further, by developing the above idea of use of common IDs specific to regions, the pager terminal 3 may be configured such that any of a plurality of reference IDs is selected according to a result of determination of the position of the pager terminal 3 to identify a call ID by using the selected reference ID.

In this case, the reference IDs for selection are stored in the ID-ROM 321 described above with reference t FIG. 7, similarly to the case of the call ID being a personal ID or a group ID, and read out from the ID-ROM 321 for identification.

This use of reference IDs is distinguished from the use of a personal ID only in that there are a plurality of reference IDs selectively read out according to a result of determination of the position of the pager terminal 3.

In the case of part of the reference IDs being common IDs specific to respective regions as well, only the region-specific common IDs are stored in the ID-ROM 321 and read out to be combined with position information for use as the variable ID.

Although the paging system 1 adopts the POCSAG (Post Office Code Standardization Advisory Group) system for the paging call signal 230, this is not limitative, but an FLEX-TD protocol or a combination of the POCSAG protocol and the FLEX-TD protocol may be adopted. According to these systems, similarly to the POCSAG protocol, it is possible to cope with a trend toward the standardization of the paging system.

The paging communications network 2 can be also adapted to a wide range applications. For instance, a control center 20 or a radio station 23 may be provided with a GPS receiver having high accuracy, to thereby obtain differential correction data. Alternatively, another similar GPS receiver at a different location close to the above GPS receiver may be caused to report differential correction data to the control center 20 to thereby enable the control center 20 to possess differential correction data of the GPS signal 500.

This makes it possible to send a paging call signal 230 to each pager terminal 3 with differential correction data included therein, causing the pager terminal 3 to correct data of a position thereof (position information) based on the differential correction data. That is, the method of determining the position of the pager terminal 3 by differential GPS (DGPS) is adopted, whereby it is possible to detect a position of the pager terminal 3 with higher accuracy.

Differential correction data for the DGPS can be also obtained from various service lines or circuits providing the differential correction data. As the service circuits (DGPS circuits) of this kind can be used those of marine medium wave beacon, International Marine Satellite Organization, and broadcasting media, such as FM multiplex broadcasting, and so forth.

Further, the above paging system 1 is constructed by using existing paging systems or the like, while the same can be easily configured by using an bidirectional paging system or the like which is to be constructed in the future as a technology trend, thereby permitting constructing and operating costs thereof to be reduced, similarly to the paging system 1.

Moreover, other than the above the POCSAG protocol or the FLEX-TD protocol, a FLEX control (Motorola system), an ERMES system (European Radio Message System) and a DARC (Data Radio Channel) system (FM multiplex broadcasting system developed mainly by NHK (Nippon Hoso Kyokai)) may be adopted.

As described above, since it is possible to extract the instantaneous velocity and direction of travel of the page terminal 3 from the Doppler information of the GPS signals, the position information may be configured to include not only the above-mentioned data of altitude but also data of velocity and direction of movement of the pager terminal 3. In this case, it is possible to send message information and the like e.g. to a limited group of pager terminals that move northward at a speed of 100 km or more per hour in a predetermined area.

Although in the above embodiments, examples of the pager terminal and the paging system are shown as the mobile terminal and the mobile communications system according to the invention, this not limitative, but examples of the mobile terminal may include a cellular phone, a PHS and the like. In these cases, a receiver that receives GPS signals can be incorporated in the cellular phone, the PHS or the like to provide the same with a variable ID (phone number or the like) that changes according to the position of the mobile terminal. This makes it possible to utilize a cellular phone network (system) or a PHS network for sending audio signals thereto and displaying messages which are intended for designated areas.

In a field of communications equipment installed on an automatic vehicle, an automotive vehicle-mounted FM multiplex receiver/transmitter (FM pager) of the DARC system or the like, which is used for receiving GPS signals, shows a trend toward the capability of receiving paging information, and hence by changing variable IDs of an FM pager according to position information from a navigation system, it is possible to transmit information with designation of automotive vehicles located at a specific place(or under specific conditions). That is, a terminal (equipment) incorporating a receiver of GPS signals is not limitative but so long as a mobile terminal is capable of determining the position thereof, it can be employed as a mobile terminal according to the present invention.

Further, if the system is equipped with a communications network that is capable of sending defined call identification information (call ID) and at the same time the system is capable of sending information to the above-mentioned various mobile terminals, the same can be applied as a mobile communications system according to the present invention, irrespective of whether it may be a single system, such as the paging system, cellular phone system, and PHS phone system, mentioned above, or a combination of any of the systems.

## Claims

1. A mobile terminal (3) comprising:
call signal receiving means (32) for receiving a paging call signal (230) including call identification information defining identification conditions and message information corresponding to said call identification information, said identification conditions including designation of a destination area (SAa5 - SAa7);
GPS signal-receiving means (31) for receiving GPS signals (500);
position-determining means (310) for determining a position of said mobile terminal (3) based on said GPS signals (500);
receiving area-defining means for defining a receiving area (RA1 - RA4) including said position of said mobile terminal (3) based on a result of said determination of said position of said mobile terminal (3) by said position-determining means (310);
determination means for determining whether or not said receiving area (RA1 - RA4) and said destination area (SAa5 - SAa7) designated in said call identification information at least partially overlap each other;
message extracting means for extracting said message information corresponding to said call identification information when it is determined by said determination means that said receiving area (RA1 - RA4) and said destination area (SAa5 - SAa7) designated in said call identification information at least partially overlap each other;
receiving area size-changing means for changing a size of said receiving area (RA1 - RA4) as desired by a user, such that the user is capable of increasing or decreasing the size of the receiving area;
**characterized in that**
the receiving area size-changing means comprise arrow keys oriented in four directions and size-increasing/decreasing keys, such that the user is capable of increasing or decreasing the size of the receiving area (RA1 - RA4) located in a selected one of four directions from a starting point located at the position of the mobile terminal (3) by operating a corresponding one of the arrow keys and one of the size increasing/decreasing keys.

2. A mobile terminal according to claim 1,
**characterized by**
a screen, onto which the size of the receiving area is displayed, while the size of the receiving area is changed.

3. A mobile terminal according to claim 1 or 2,
**characterized in, that**
the call signal receiving means (32) are further adapted for receiving multiple paging call signals (230), and that the mobile terminal (3) further comprises:
memory means for storing at least one piece of reference identification information of said mobile terminal (3), said at least one piece of reference identification information including variable identification information;
variable identification information-changing means for changing said variable identification information based on a result of said determination of said position of the mobile terminal (3) by said position-determining means (310);
second determination means for determining whether or not one of said at least one piece of reference identification information fulfills said identification conditions of a received one of said paging call signals; and
identification means for identifying that said received one of said paging call signals is a call signal intended for the mobile terminal (3) when it is determined by said determination means that said one of said at least one piece of reference identification information of said paging call signal received fulfills said identification conditions of said received one of said paging call signals.

4. A mobile terminal according to claim 3,
**characterized by**
position information-producing means for producing position information encoded based on said result of said determination of said position of said each of said mobile terminals by said position-determining means,
wherein said variable identification information includes said encoded position information.

5. A mobile terminal according to any one of the preceding claims,
**characterized in, that**
the mobile terminal (3) is adapted to process call identification information which includes a piece of destination area-designating call identification information that permits said identification conditions to be fulfilled only when the mobile terminal (3) is located in a designated destination area (SAa5 - SAa7).

6. A mobile terminal according to claim 5,
**characterized in, that**
the mobile terminal (3) is adapted to process the piece of destination area-designating call identification information which includes position information that hierarchically expresses said designated destination area.

7. A mobile terminal according to claim 5 or 6,
**characterized in, that**
the mobile terminal (3) is adapted to process the piece of destination area-designating call identification information which includes regional characteristic identification information that defines regional characteristics of said designated destination area.

8. A mobile terminal according to one of claims 5 to 7,
**characterized in, that**
the mobile terminal (3) is adapted to process the piece of destination area-designating call identification information which includes terminal-by-terminal characteristics of said mobile terminal (3).

## Patentansprüche

1. Mobiles Endgerät (3), aufweisend:
Rufsignalempfangsmittel (32) zum Empfangen eines Funkrufsignals (230), das Rufidentifizierungsinformationen enthält, die Identifizierungsbedingungen und Nachrichteninformationen entsprechend den Rufidentifizierungsinformationen definieren, wobei die Identifizierungsbedingungen die Angabe eines Zielbereichs (SAa5 bis SAa7) enthalten;
GPS- (global positioning system - weltweites Navigationssystem) -Signalempfangsmittel (31) zum Empfangen von GPS-Signalen (500);
Positionsbestimmungsmittel (310) zum Bestimmen der Position des mobilen Endgeräts (3) auf Basis der GPS-Signale (500);
Mittel zum Definieren des Empfangsbereichs zum Definieren eines Empfangsbereichs (RA1 bis RA4), der die Position des mobilen Endgeräts (3) enthält, auf Basis des Ergebnisses der Positionsbestimmung des mobilen Endgeräts (3) durch die Positionsbestimmungsmittel (310);
Bestimmungsmittel zur Bestimmung, ob der Empfangsbereich (RA1 bis RA4) und der Zielbereich (SAa5 bis SAa7), der in den Rufidentifizierungsinformationen angegeben ist, einander zumindest teilweise überlappen oder nicht;
Nachrichtenauskopplungsmittel zum Auskoppeln der Nachrichteninformationen entsprechend den Rufidentifizierungsinformationen, wenn durch die Bestimmungsmittel bestimmt wird, dass der Empfangsbereich (RA1 bis RA4) und der Zielbereich (SAa5 bis SAa7), der in den Rufidentifizierungsinformationen angegeben ist, einander zumindest teilweise überlappen; Mittel zum Ändern der Größe des Empfangsbereichs zum Ändern der Größe des Empfangsbereichs (RA1 bis RA4) wie von einem Benutzer gewünscht, so dass der Benutzer die Größe des Empfangsbereichs vergrößern oder verkleinern kann;
**dadurch gekennzeichnet, dass**
die Mittel zum Ändern der Größe des Empfangsbereichs Pfeiltasten aufweisen, die in vier Richtungen orientiert sind, und Tasten zum Vergrößern/Verkleinern der Größe, so dass der Benutzer die Größe des Empfangsbereichs (RA1 bis RA4) in einer gewählten der vier Richtungen von einem Ausgangspunkt, der sich in der Position des mobilen Endgeräts (3) befindet, durch Betätigen einer entsprechenden Pfeiltaste und einer der Tasten zum Vergrößern/Verkleinern der Größe vergrößern oder verkleinern kann.

2. Mobiles Endgerät nach Anspruch 1,
**gekennzeichnet durch**
einen Bildschirm, auf dem die Größe des Empfangsbereichs angezeigt wird, während die Größe des Empfangsbereichs geändert wird.

3. Mobiles Endgerät nach Anspruch 1 oder 2,
**dadurch gekennzeichnet, dass**
die Rufsignalempfangsmittel (32) ferner für den Empfang mehrerer Funkrufsignale (230) ausgeführt sind, und dass das mobile Endgerät (3) ferner aufweist:
Speichermittel zum Speichern zumindest eines Stücks Referenzidentifizierungsinformationen des mobilen Endgeräts (3), wobei das mindestens eine Stück Referenzidentifizierungsinformationen variable Identifizierungsinformationen enthält;
Mittel zum Ändern der variablen Identifizierungsinformationen zum Ändern der variablen Identifizierungsinformationen auf Basis des Ergebnisses der Positionsbestimmung des mobilen Endgeräts (3) durch die Positionsbestimmungsmittel (310);
zweite Bestimmungsmittel zur Bestimmung, ob das mindestens eine Stück Referenzidentifizierungsinformationen die Identifizierungsbedingungen eines der empfangenen Funkrufsignale erfüllt oder nicht; und
Identifizierungsmittel zur Identifizierung, dass das eine empfangene Signal der Funkrufsignale ein für das mobile Endgerät (3) bestimmtes Rufsignal ist, wenn durch die Bestimmungsmittel bestimmt wird, dass das eine Stück des mindestens einen Stücks Referenzidentifizierungsinformationen des empfangenen Funkrufsignals die Identifizierungsbedingungen des einen empfangenen Signals der Funkrufsignale erfüllt.

4. Mobiles Endgerät nach Anspruch 3,
**gekennzeichnet durch**
Mittel zur Erzeugung von Positionsinformationen zur Erzeugung codierter Positionsinformationen auf Basis des Ergebnisses der Positionsbestimmung jedes der mobilen Endgeräte durch das Positionsbestimmungsmittel,
wobei die variablen Identifizierungsinformationen die codierten Positionsinformationen enthalten.

5. Mobiles Endgerät nach einem der vorigen Ansprüche,
**dadurch gekennzeichnet, dass**
das mobile Endgerät (3) so ausgeführt ist, dass es Rufidentifizierungsinformationen verarbeitet, die ein Stück Rufidentifizierungsinformationen zur Angabe des Zielbereichs enthalten, die eine Erfüllung der Identifizierungsinformationen nur dann zulassen, wenn sich das mobile Endgerät (3) in einem angegebenen Zielbereich (SAa5 bis SAa7) befindet.

6. Mobiles Endgerät nach Anspruch 5,
**dadurch gekennzeichnet, dass**
das mobile Endgerät (3) so ausgeführt ist, dass es das Stück Rufidentifizierungsinformationen zur Angabe des Zielbereichs verarbeitet, das Positionsinformationen enthält, die den angegebenen Zielbereich hierarchisch ausdrücken.

7. Mobiles Endgerät nach Anspruch 5 oder 6,
**dadurch gekennzeichnet, dass**
das mobile Endgerät (3) so ausgeführt ist, dass es das Stück Rufidentifizierungsinformationen zur Angabe des Zielbereichs verarbeitet, das regionale charakteristische Identifizierungsinformationen enthält, die regionale Eigenschaften des angegebenen Zielbereichs definieren.

8. Mobiles Endgerät nach einem der Ansprüche 5 bis 7,
**dadurch gekennzeichnet, dass**
das mobile Endgerät (3) so ausgeführt ist, dass es das Stück Rufidentifizierungsinformationen zur Angabe des Zielbereichs verarbeitet, das Endgerät-zu-Endgerät-Eigenschaften des mobilen Endgeräts (3) enthält.

## Revendications

1. Terminal mobile (3), comprenant :
des moyens de réception de signal d'appel (32) pour recevoir un signal d'appel de recherche (230) incluant une information d'identification d'appel définissant des conditions d'identification et une information de message correspondant à ladite information d'identification d'appel, lesdites conditions d'identification incluant une désignation d'une zone de destination (SAa5-SAa7) ;
des moyens de réception de signaux GPS (31) pour recevoir des signaux GPS (500) ;
des moyens de détermination de position (310) pour déterminer une position dudit terminal mobile (3) en se basant sur lesdits signaux GPS (500) ;
des moyens de définition de zone de réception pour définir une zone de réception (RA1-RA4) incluant ladite position dudit terminal mobile (3) en se basant sur un résultat de ladite détermination de position dudit terminal mobile (3) par lesdits moyens de détermination de position (310) ;
des moyens de détermination pour déterminer si ladite zone de réception (RA1-RA4) et ladite zone de destination (SAa5-SAa7) désignées dans ladite information d'identification d'appel se chevauchent ou non au moins partiellement l'une l'autre ;
des moyens d'extraction de message pour extraire ladite information de message correspondant à ladite information d'identification d'appel lorsqu'il est déterminé par lesdits moyens de détermination que ladite zone de réception (RA1-RA4) et ladite zone de destination (SAa5-SAa7) désignées dans ladite information d'identification d'appel se chevauchent au moins partiellement l'une l'autre ;
des moyens de changement de taille de zone de réception pour changer la taille de ladite zone de réception (RA1-RA4) de la façon désirée par un utilisateur, de telle façon que l'utilisateur soit capable d'augmenter ou de diminuer la taille de la zone de réception ;
**caractérisé en ce que**
les moyens de changement de taille de zone de réception comprennent des touches fléchées orientées dans quatre directions et des touches d'augmentation/diminution de taille, de sorte que l'utilisateur est capable d'augmenter ou de diminuer la taille de la zone de réception (RA1-RA4) située dans une direction choisie parmi les quatre directions depuis un point de départ situé à la position du terminal mobile (3) en actionnant une touche correspondante parmi les touches fléchées et une touche correspondante parmi les touches d'augmentation/diminution de taille.

2. Terminal mobile selon la revendication 1, **caractérisé par** un écran sur lequel est affichée la taille de la zone de réception, lorsque la taille de la zone de réception est changée.

3. Terminal mobile selon la revendication 1 ou 2, **caractérisé en ce que** les moyens de réception de signal d'appel (32) sont en outre adaptés à recevoir une multiplicité de signaux d'appel de recherche (230), et **en ce que** le terminal mobile (3) comprend en outre :
des moyens à mémoire pour stocker au moins un morceau d'information d'identification de référence dudit terminal mobile (3), ledit au moins un morceau d'information d'identification de référence incluant une information d'identification variable ;
des moyens de changement d'information d'identification variable pour changer ladite information d'identification variable en se basant sur un résultat de ladite détermination de ladite position du terminal mobile (3) par lesdits moyens de détermination de position (310) ;
des seconds moyens de détermination pour déterminer si ledit au moins un morceau d'information d'identification de référence satisfait ou non lesdites conditions d'identification d'un signal reçu parmi lesdits signaux d'appel de recherche ; et
des moyens d'identification pour identifier que ledit signal reçu parmi les signaux d'appel de recherche est un signal d'appel destiné au terminal mobile (3) lorsqu'il est déterminé par lesdits moyens de détermination que ledit au moins un morceau d'information d'identification de référence dudit signal d'appel de recherche reçu satisfait lesdites conditions d'identification du signal reçu parmi lesdits signaux d'appel de recherche.

4. Terminal mobile selon la revendication 3, **caractérisé par** des moyens de production d'information de position pour produire une information de position codée en se basant sur ledit résultat de ladite détermination de ladite position de chacun desdits terminaux mobiles par lesdits moyens de détermination de position,
dans lequel ladite information d'identification variable inclut ladite information de position codée.

5. Terminal mobile selon l'une quelconque des revendications précédentes, **caractérisé en ce que** le terminal mobile (3) est adapté à traiter une information d'identification d'appel qui inclut un morceau d'information d'identification d'appel désignant une zone de destination qui permet de satisfaire lesdites conditions d'identification uniquement quand le terminal mobile (3) est situé dans une zone de destination désignée (SAa5-SAa7).

6. Terminal mobile selon la revendication 5, **caractérisé en ce que** le terminal mobile (3) est adapté à traiter le morceau d'information d'identification d'appel désignant une zone de destination qui inclut une formation de position qui exprime hiérarchiquement ladite zone de destination désignée.

7. Terminal mobile selon la revendication 5 ou 6, **caractérisé en ce que** le terminal mobile (3) est adapté à traiter le morceau d'information d'identification d'appel désignant une zone de destination qui inclut une information d'identification caractéristique régionale qui définit des caractéristiques régionales de ladite zone de destination désignée.

8. Terminal mobile selon l'une des revendications 5 à 7, **caractérisé en ce que** le terminal mobile (3) est adapté à traiter le morceau d'information d'identification d'appel désignant une zone de destination qui inclut des caractéristiques propres à chaque terminal dans ledit terminal mobile (3).
